(19) Europäisches Patentamt
European Patent Office
Office européen des brevets

(11) **EP 4 778 776 A1**

(12) **EUROPEAN PATENT APPLICATION**
published in accordance with Art. 153(4) EPC

(43) Date of publication:
**22.07.2026 Bulletin 2026/30**

(21) Application number: **24867208.1**

(22) Date of filing: **20.08.2024**

(51) International Patent Classification (IPC):
**B60L 58/27** (2019.01)  **B60H 1/00** (2006.01)

(86) International application number:
**PCT/CN2024/113275**

(87) International publication number:
**WO 2025/060793 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.09.2023 CN 202311210846**

(71) Applicant: **Shenzhen Yinwang Intelligent
Technologies Co., Ltd.
Shenzhen, Guangdong 518110 (CN)**

(72) Inventors:
• **HU, Yuying**
  **Shenzhen, Guangdong 518129 (CN)**
• **ZHONG, Kai**
  **Shenzhen, Guangdong 518129 (CN)**
• **ZHU, Caixin**
  **Shenzhen, Guangdong 518129 (CN)**
• **GE, Xinming**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **VEHICLE THERMAL MANAGEMENT METHOD AND RELATED APPARATUS**

(57) This application provides a vehicle thermal management method and a related apparatus. The method includes: in response to a start operation on a vehicle in a first driving process, identifying, in a plurality of preset driving scenarios, a target driving scenario to which the first driving process belongs, where the first driving process includes a process from starting the vehicle to completing driving; obtaining target driving situation information, where the target driving situation information includes driving situation information of m historical driving processes that belong to the target driving scenario, and m is an integer greater than 1; and controlling a target thermal management operation based on the target driving situation information and battery status information obtained after the vehicle is started, where the target thermal management operation includes a battery heating operation and/or a cabin temperature adjustment operation on the vehicle in the first driving process. Embodiments of this application can implement vehicle thermal management in a low-temperature environment, to meet a driving mileage requirement and user's heating requirement.

S201: In response to a start operation on a vehicle in a first driving process, a control apparatus identifies, in a plurality of preset driving scenarios, a target driving scenario to which the first driving process belongs, where the first driving process includes a process from starting the vehicle to completing driving

S202: The control apparatus obtains target driving situation information, where the target driving situation information includes driving situation information of m historical driving processes that belong to the target driving scenario, and m is an integer greater than 1

S203: The control apparatus controls a target thermal management operation based on the target driving situation information and battery status information after the vehicle is started, where the target thermal management operation includes a battery heating operation on the vehicle and/or a cabin temperature adjustment operation on the vehicle in the first driving process

FIG. 2

**Description**

This application claims priority to Chinese Patent Application No. 202311210846.3, filed with the China National Intellectual Property Administration on September 18, 2023, and entitled "VEHICLE THERMAL MANAGEMENT METHOD AND RELATED APPARATUS", which is incorporated herein by reference in its entirety.

**TECHNICAL FIELD**

This application relates to the field of vehicle technologies, and specifically, to a vehicle thermal management method and a related apparatus.

**BACKGROUND**

Thermal management of a vehicle in a low-temperature environment is a key technical problem. Low temperatures reduce a capacity and power performance of a battery, shortening endurance mileage and reducing a power output. In addition, the low-temperature environment increases a requirement of a user in a vehicle cabin for heating in the vehicle, further increasing vehicle energy consumption and an output load of the power battery. Therefore, how to implement vehicle thermal management in a low-temperature environment to meet a driving mileage requirement and user's heating requirement is an urgent technical problem to be resolved by persons skilled in the art.

**SUMMARY**

This application provides a vehicle thermal management method and a related apparatus, to implement vehicle thermal management in a low-temperature environment, thereby meeting a driving mileage requirement and user's heating requirement.

According to a first aspect, this application provides a vehicle thermal management method. The method includes:

in response to a start operation on a vehicle in a first driving process, identifying, in a plurality of preset driving scenarios, a target driving scenario to which the first driving process belongs, where the first driving process includes a process from starting the vehicle to completing driving;

obtaining target driving situation information, where the target driving situation information includes driving situation information of m historical driving processes that belong to the target driving scenario, and m is an integer greater than 1; and

controlling a target thermal management operation based on the target driving situation information and battery status information obtained after the vehicle is started, where the target thermal management operation includes a battery heating operation and/or a cabin temperature adjustment operation on the vehicle in the first driving process.

In the foregoing solution, after the vehicle is started, battery heating and/or cabin temperature adjustment are/is controlled based on driving situation information of a plurality of historical driving processes in a same-type driving scenario and a current battery status of the vehicle. To be specific, the current battery status is comprehensively considered based on driving situations of the historical driving processes. This meets an energy consumption requirement generated in a driving process of the vehicle due to driving, user heating, and the like. In addition, compared with a unified thermal management solution, this solution can provide required thermal management for different driving scenarios, adaptively meet thermal management requirements of the different driving scenarios, improve running efficiency of the vehicle in a low-temperature environment, and reduce unnecessary energy consumption waste.

In a possible implementation, the target driving situation information includes m pieces of energy consumption information, an $i^{th}$ piece of energy consumption information belongs to energy consumption information of an $i^{th}$ historical driving process, and a value of i is an integer from 1 to m; and controlling the target thermal management operation based on the target driving situation information and the battery status information obtained after the vehicle is started includes:

predicting required target total energy consumption in the first driving process based on the m pieces of energy consumption information; and

controlling the target thermal management operation based on the target total energy consumption and the battery status information.

In this solution, required energy consumption in a current driving process is predicted based on energy consumption information of the plurality of historical driving processes, and the battery status is comprehensively considered, to control a thermal management operation. This can appropriately use battery energy, and reduce energy consumption waste while ensuring a travel energy consumption requirement.

In a possible implementation, the target thermal management operation includes the battery heating operation; the target driving situation information further includes m battery output powers, and an $i^{th}$ battery output power belongs to a battery output power of the $i^{th}$ historical driving process; and

controlling the target thermal management operation based on the target total energy consumption and the battery status information includes:

controlling the battery heating operation based on the target total energy consumption, a target battery output power, and the battery status information, where the target battery output power is a battery output power that is predicted based on the m battery output powers and that is required in the first driving process.

In this solution, required energy consumption, a battery output power, and the battery status in the current driving process are comprehensively considered, to control battery heating. This improves battery performance and further improves power performance of the vehicle.

In a possible implementation, the battery status information includes a remaining state of charge and an allowed output power of the battery; and

controlling the battery heating operation based on the target total energy consumption, the target battery output power, and the battery status information includes:

starting the battery heating operation when the allowed output power meets a requirement of the target battery output power, and the remaining state of charge meets a requirement of the target total energy consumption and an energy consumption requirement of the battery heating operation.

This solution is a lower-level implementation solution for controlling battery heating. A battery heating operation is started only when a battery can afford an energy consumption requirement of a current travel and a battery heating energy consumption requirement. This avoids a failure in completing the current driving process due to occupation of an energy consumption requirement of the travel.

In a possible implementation, the battery heating operation indicates to heat the battery to a target temperature, and the target temperature is determined based on the target battery output power.

In this solution, a temperature to which the battery is heated to may be further set based on a battery output capability required for the current travel. This better meets a power requirement of the current driving process.

In a possible implementation, the remaining state of charge includes a state of charge increased after the battery heating operation is performed.

In this solution, battery heating benefit is further considered, to improve utilization of the battery energy.

In a possible implementation, the target thermal management operation includes the cabin temperature adjustment operation; the target driving situation information further includes m pieces of thermal comfort preference information, and an $i^{th}$ piece of thermal comfort preference information is determined based on a cabin environment in the $i^{th}$ historical driving process; and

controlling the target thermal management operation based on the target total energy consumption and the battery status information includes:

controlling the cabin temperature adjustment operation based on the target total energy consumption, target thermal comfort preference information, and the battery status information, where the target thermal comfort preference information is thermal comfort preference information that is predicted based on the m pieces of thermal comfort preference information and that is in the first driving process.

In this solution, the required energy consumption, user's thermal comfort, and the battery status in the current driving process are comprehensively considered, to control a cabin temperature adjustment operation. This better meets user's heating requirement.

In a possible implementation, the battery status information includes the remaining state of charge of the battery; and controlling the cabin temperature adjustment operation based on the target total energy consumption, the target thermal comfort preference information, and the battery status information includes:

controlling the cabin temperature adjustment operation based on the target thermal comfort preference information when the remaining state of charge meets the requirement of the target total energy consumption and a requirement of energy consumption required for the cabin temperature adjustment operation.

In this solution, a cabin temperature is further adjusted based on user's thermal comfort preference only when a remaining state of charge of the battery meets the energy consumption requirement of the current travel. This preferentially ensures a power performance energy consumption requirement of the travel, and avoids the failure in completing the current driving process due to occupation of the power performance energy consumption requirement of the travel.

In a possible implementation, the cabin temperature adjustment operation includes an air conditioning heating operation; and controlling the cabin temperature adjustment operation based on the target thermal comfort preference information includes:

searching a first preset relationship table for a target air outlet temperature and/or a target air speed of an air conditioning based on the target thermal comfort preference information and a temperature of a cabin, where air outlet temperatures and/or air speeds, corresponding to a plurality of pieces of thermal comfort preference information and a plurality of cabin temperatures, of the air conditioning are recorded in the first preset relationship table; and

starting the air conditioning heating operation based on the target air outlet temperature and/or the target air speed.

In this solution, an air conditioning heating temperature and/or an air conditioning heating air speed may be further set based on user's thermal comfort preference in the current travel. This better meets user's heating requirement.

In a possible implementation, starting the air conditioning heating operation based on the target air outlet temperature and/or the target air speed includes:

recommending the target air outlet temperature and/or the target air speed to a user through a human machine interaction interface; and
starting the air conditioning heating operation based on the target air outlet temperature and/or the target air speed in response to a confirmation operation of the user.

In this solution, the user may also be interacted with, related adjustment parameters are recommended to the user, and a corresponding heating operation is started based on a confirmation operation of the user. This improves user perception and improves user experience.

In a possible implementation, the cabin temperature adjustment operation includes a heating operation on a target apparatus, and the target apparatus includes at least one of a steering wheel, a seat, and a front windshield; and controlling the cabin temperature adjustment operation based on the target thermal comfort preference information includes:

searching a second preset relationship table for a target heating level of the target apparatus based on a deviation between the target thermal comfort preference information and current thermal comfort preference information, where heating levels, corresponding to a plurality of thermal comfort preference information deviation ranges, of the target apparatus are recorded in the second preset relationship table, and the current thermal comfort preference information is determined based on a cabin environment after the vehicle is started in the first driving process; and
starting the heating operation on the target apparatus based on the target heating level.

In this solution, a heating level of an apparatus like a steering wheel and a seat may be further set based on predicted thermal comfort preference and thermal comfort in a current cabin. This better meets user's heating requirement.

In a possible implementation, starting the heating operation on the target apparatus based on the target heating level includes:

recommending the target heating level to the user through the human machine interaction interface; and
starting the heating operation on the target apparatus based on the target heating level in response to a confirmation operation of the user.

In this solution, the user may also be interacted with, related adjustment parameters are recommended to the user, and a corresponding heating operation is started based on a confirmation operation of the user. This improves user perception and improves user experience.

In a possible implementation, in response to the start operation on the vehicle in the first driving process, identifying, in the plurality of preset driving scenarios, the target driving scenario to which the first driving process belongs includes:

obtaining start information of the vehicle in the first driving process, where the start information includes start time and/or location information of the vehicle during the start; and
identifying, in the plurality of preset driving scenarios based on the start information, the target driving scenario to which the first driving process belongs.

In this solution, a driving process in a same-type driving scenario is identified based on start information of the vehicle. This is simple and easy to implement, and can accurately and effectively identify a driving scenario to which the driving process belongs.

In a possible implementation, the start information includes the start time, and identifying, in the plurality of preset driving scenarios based on the start information, the target driving scenario to which the first driving process belongs includes:

matching the start time with a plurality of time periods, where the plurality of time periods one-to-one correspond to the plurality of preset driving scenarios, and the plurality of time periods are different time periods in one day; and

when the start time belongs to time of a period corresponding to the target driving scenario, identifying that a driving scenario to which the first driving process belongs is the target driving scenario.

In this solution, the period in which the start time is located is matched to identify the target driving scenario.

In a possible implementation, the start information includes the location information of the vehicle during the start, and identifying, in the plurality of preset driving scenarios based on the start information, the target driving scenario to which the first driving process belongs includes:

matching the location information of the vehicle during the start with location information corresponding to the plurality of preset driving scenarios; and

when the location information of the vehicle during the start belongs to location information corresponding to the target driving scenario, identifying that a driving scenario to which the first driving process belongs is the target driving scenario.

In this solution, the location information of the vehicle during the start may be matched to identify the target driving scenario.

According to a second aspect, this application provides a vehicle thermal management apparatus. The apparatus includes:

an identification unit, configured to identify, in response to a start operation on a vehicle in a first driving process, in a plurality of preset driving scenarios, a target driving scenario to which the first driving process belongs, where the first driving process includes a process from starting the vehicle to completing driving;

an obtaining unit, configured to obtain target driving situation information, where the target driving situation information includes driving situation information of m historical driving processes that belong to the target driving scenario, and m is an integer greater than 1; and

a controlling unit, configured to control a target thermal management operation based on the target driving situation information and battery status information obtained after the vehicle is started, where the target thermal management operation includes a battery heating operation and/or a cabin temperature adjustment operation on the vehicle in the first driving process.

In a possible implementation, the target driving situation information includes m pieces of energy consumption information, an $i^{th}$ piece of energy consumption information belongs to energy consumption information of an $i^{th}$ historical driving process, and a value of i is an integer from 1 to m; and the controlling unit is specifically configured to:

predict required target total energy consumption in the first driving process based on the m pieces of energy consumption information; and

control the target thermal management operation based on the target total energy consumption and the battery status information.

In a possible implementation, the target thermal management operation includes the battery heating operation; the target driving situation information further includes m battery output powers, and an $i^{th}$ battery output power belongs to a battery output power of the $i^{th}$ historical driving process; and

the controlling unit is specifically configured to:

control the battery heating operation based on the target total energy consumption, a target battery output power, and the battery status information, where the target battery output power is a battery output power that is predicted based on the m battery output powers and that is required in the first driving process.

In a possible implementation, the battery status information includes a remaining state of charge and an allowed output power of the battery; and

the controlling unit is specifically configured to:

start the battery heating operation when the allowed output power meets a requirement of the target battery output power, and the remaining state of charge meets a requirement of the target total energy consumption and an energy consumption requirement of the battery heating operation.

In a possible implementation, the battery heating operation indicates to heat the battery to a target temperature, and the target temperature is determined based on the target battery output power.

In a possible implementation, the remaining state of charge includes a state of charge increased after the battery heating operation is performed.

In a possible implementation, the target thermal management operation includes the cabin temperature adjustment operation; the target driving situation information further includes m pieces of thermal comfort preference information, and an $i^{th}$ piece of thermal comfort preference information is determined based on a cabin environment in the $i^{th}$ historical driving process; and

the controlling unit is specifically configured to:

control the cabin temperature adjustment operation based on the target total energy consumption, target thermal comfort preference information, and the battery status information, where the target thermal comfort preference information is thermal comfort preference information that is predicted based on the m pieces of thermal comfort preference information and that is in the first driving process.

In a possible implementation, the battery status information includes the remaining state of charge of the battery; and the controlling unit is specifically configured to:

control the cabin temperature adjustment operation based on the target thermal comfort preference information when the remaining state of charge meets the requirement of the target total energy consumption and a requirement of energy consumption required for the cabin temperature adjustment operation.

In a possible implementation, the cabin temperature adjustment operation includes an air conditioning heating operation; and the controlling unit is specifically configured to:

search a first preset relationship table for a target air outlet temperature and/or a target air speed of an air conditioning based on the target thermal comfort preference information and a temperature of a cabin, where air outlet temperatures and/or air speeds, corresponding to a plurality of pieces of thermal comfort preference information and a plurality of cabin temperatures, of the air conditioning are recorded in the first preset relationship table; and start the air conditioning heating operation based on the target air outlet temperature and/or the target air speed.

In a possible implementation, the controlling unit is specifically configured to:

recommend the target air outlet temperature and/or the target air speed to a user through a human machine interaction interface; and start the air conditioning heating operation based on the target air outlet temperature and/or the target air speed in response to a confirmation operation of the user.

In a possible implementation, the cabin temperature adjustment operation includes a heating operation on a target apparatus, and the target apparatus includes at least one of a steering wheel, a seat, and a front windshield; and the controlling unit is specifically configured to:

search a second preset relationship table for a target heating level of the target apparatus based on a deviation between the target thermal comfort preference information and current thermal comfort preference information, where heating levels, corresponding to a plurality of thermal comfort preference information deviation ranges, of the target apparatus are recorded in the second preset relationship table, and the current thermal comfort preference information is determined based on a cabin environment after the vehicle is started in the first driving process; and start the heating operation on the target apparatus based on the target heating level.

In a possible implementation, in response to the start operation on the vehicle in the first driving process, identifying, in the plurality of preset driving scenarios, the target driving scenario to which the first driving process belongs includes:

obtaining start information of the vehicle in the first driving process, where the start information includes start time and/or location information of the vehicle during the start; and identifying, in the plurality of preset driving scenarios based on the start information, the target driving scenario to which the first driving process belongs.

According to a third aspect, this application provides a vehicle thermal management apparatus. The vehicle thermal management apparatus includes a processor, a communication interface, and a memory. The communication interface is configured to receive and send data, the memory is configured to store a computer program or computer instructions, and the processor is configured to execute the computer program or the computer instructions stored in the memory, so that the vehicle thermal management apparatus performs the method according to any one of the first aspect and the possible implementations of the first aspect.

According to a fourth aspect, this application provides a vehicle. The vehicle includes the vehicle thermal management apparatus according to any one of the second aspect or the third aspect.

According to a fifth aspect, this application provides a chip. The chip includes a processor, a communication interface, and a memory. The communication interface is configured to receive and send data, the memory is configured to store a computer program or computer instructions, and the processor is configured to execute the computer program or the computer instructions stored in the memory, so that the chip performs the method according to any one of the first aspect and the possible implementations of the first aspect.

According to a sixth aspect, this application provides a computer-readable storage medium. The computer-readable storage medium stores a computer program or computer instructions, and the computer program or computer instructions are executed by a processor to implement the method according to any one of the first aspect and the possible implementations of the first aspect.

According to a seventh aspect, this application provides a computer program product. When the computer program product is executed by a processor, the method according to any one of the first aspect and the possible implementations of the first aspect is implemented.

The solutions provided in the second aspect to the seventh aspect are used to implement or cooperate to implement the method provided in the first aspect, and therefore, can achieve beneficial effect the same as or corresponding to that in the first aspect. Details are not described herein again.

**BRIEF DESCRIPTION OF DRAWINGS**

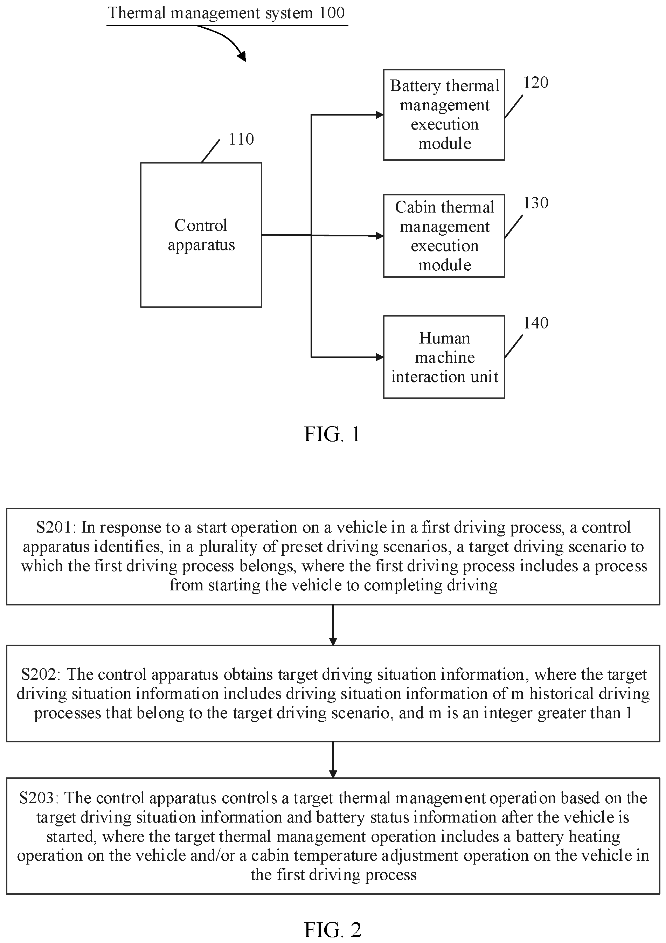

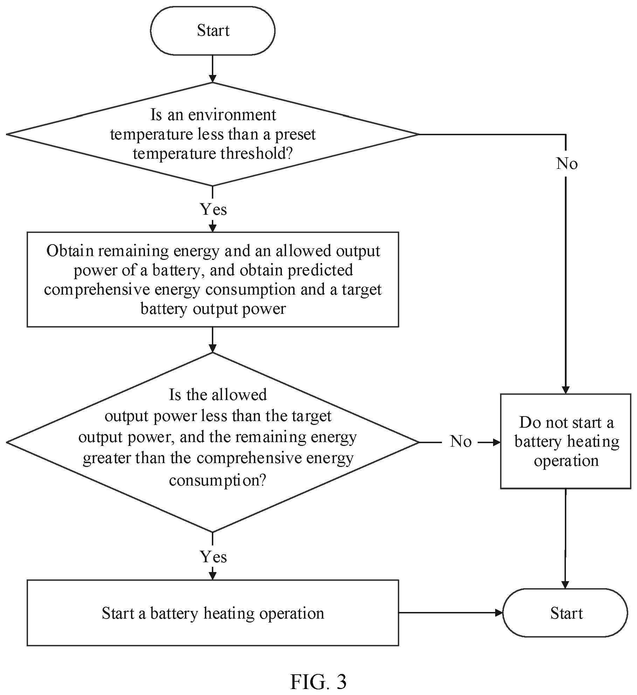

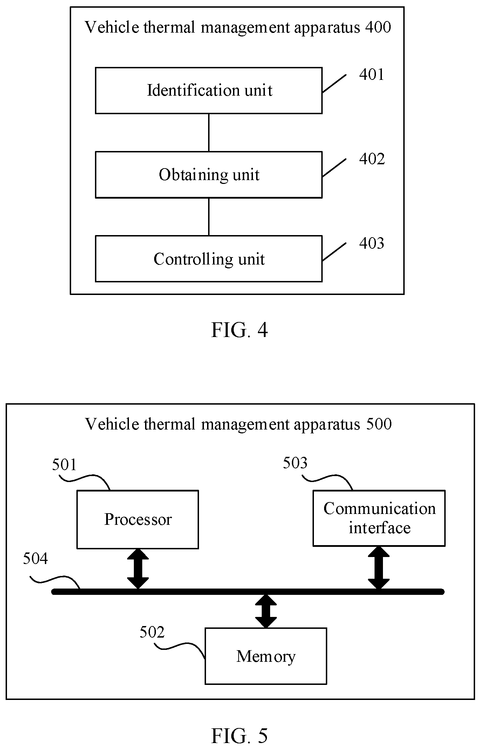

FIG. 1 is a diagram of a structure of a thermal management system according to an embodiment of this application;
Each of FIG. 2 and FIG. 3 is a schematic flowchart of a method according to an embodiment of this application; and
Each of FIG. 4 and FIG. 5 is a diagram of a structure of an apparatus according to an embodiment of this application.

**DESCRIPTION OF EMBODIMENTS**

In embodiments of this application, "a plurality of" means two or more than two. In embodiments of this application, "and/or" is used to describe an association relationship between associated objects, and represents three relationships that can exist independently. For example, A and/or B can represent the following: Only A exists, only B exists, or both A and B exist. A description, for example, "at least one (or at least one piece) of a1, a2, ..., and an", used in embodiments of this application includes a case in which any one of a1, a2, ..., and an exists alone, and also includes any combination of any plurality of a1, a2, ..., and an. Each case can exist alone. For example, a description of "at least one of a, b, and c" includes a case of a single a, a single b, a single c, a combination of a and b, a combination of a and c, a combination of b and c, or a combination of a, b, and c.

In various embodiments of this application, unless otherwise stated or there is a logic conflict, terms and/or descriptions in embodiments are consistent and can be mutually referenced, and technical features in different embodiments can be combined based on an internal logical relationship thereof, to form a new embodiment.

To implement vehicle thermal management in a low-temperature environment to meet a driving mileage requirement and user's heating requirement, embodiments of this application provide a vehicle thermal management method and a related apparatus. The following first describes, with reference to FIG. 1, an architecture of a thermal management system in a vehicle in embodiments of this application.

FIG. 1 is a diagram of a structure of a thermal management system 100. It can be seen that the thermal management system 100 includes a control apparatus 110, a battery thermal management execution module 120, a cabin thermal management execution module 130, and a human machine interaction unit 140.

For example, the control apparatus 110 may be a domain controller, a vehicle central computer (vehicle central computer, VCC), another control module, or the like in a vehicle. For example, the domain controller may be a power domain controller, a chassis domain controller, a vehicle domain controller, a cockpit domain controller, or an autonomous driving domain controller in the vehicle. It may be understood that the description of the control apparatus 110 herein is merely an example, and does not constitute a limitation on embodiments of this application.

For example, the battery thermal management execution module 120 may include a heating component like a positive temperature coefficient (positive temperature coefficient) heater. Alternatively, the battery thermal management execution module 120 may include an electric heating film preheating system. The electric heating film preheating system uses an electric heating film as a heating element, adjusts a heating power by adjusting a loaded voltage, and has advantages of even heating and a wide power adjustment range. Alternatively, the battery thermal management execution module 120 may include, for example, a liquid cooling preheating system. The liquid cooling preheating system is a liquid cooling system including a liquid cooling radiator, a coolant circulation pipeline, a heat exchange system, and a liquid circulation power, and implements cooling and heating of a power battery, and has advantages of high heating efficiency, good heat preservation effect, and strong adaptability. Alternatively, the battery thermal management execution module 120 may include, for example, a heat pipe preheating system. The heat pipe preheating system uses a heat pipe as an efficient heat transfer component to transfer heat of an external heater to the inside of a battery pack. For example, a battery may be a power battery in the vehicle, or the like.

For example, the control apparatus 110 may send a control instruction to the battery thermal management execution module 120, to control the module to perform a battery heating operation.

For example, the cabin thermal management execution module 130 may include one or more of the following: an air conditioning adjustment module, a steering wheel heating module, a seat heating module, a front windshield heating module, and the like. For example, the air conditioning adjustment module may include an apparatus like an air conditioning heat pump. For example, the steering wheel heating module, the seat heating module, or the front windshield heating module may include components such as a heating resistance wire.

For example, the control apparatus 110 may send a control instruction to the air conditioning adjustment module, to control the module to perform an air conditioning heating operation. The air conditioning heating operation may include outputting hot air to a cabin based on a set temperature and/or air speed. For example, the control apparatus 110 may send a control instruction to the steering wheel heating module, to control the module to perform a steering wheel heating operation. For example, the control apparatus 110 may send a control instruction to the seat heating module, to control the module to perform a seat heating operation. For example, the control apparatus 110 may send a control instruction to the front windshield heating module, to control the module to perform a front windshield heating operation.

For example, the human machine interaction unit 140 may include a human machine interface (human machine interface, HMI) module, an in-vehicle voice prompt module, and/or the like. For example, the control apparatus 110 may recommend information to a user by using the human machine interaction unit 140. For example, the recommended information may be displayed to the user by using the HMI module. Alternatively, for example, the recommended information may be voice-broadcast to the user by using the in-vehicle voice prompt module.

It may be understood that the thermal management system 100 shown in FIG. 1 is merely an example, and does not constitute a limitation on embodiments of this application.

For example, each control instruction may be a control instruction generated by the control apparatus 110 based on the vehicle thermal management method provided in embodiments of this application. The following describes an implementation of the vehicle thermal management method by using an example.

For example, FIG. 2 is a schematic flowchart of a vehicle thermal management method according to an embodiment of this application. The method may include but is not limited to the following operations.

S201: In response to a start operation on a vehicle in a first driving process, a control apparatus identifies, in a plurality of preset driving scenarios, a target driving scenario to which the first driving process belongs, where the first driving process includes a process from starting the vehicle to completing driving.

For example, the control apparatus may be, for example, the control apparatus 110 shown in FIG. 1. The first driving process may be any driving process that belongs to the target driving scenario. A driving process is a process from starting the vehicle to completing driving.

For example, starting the vehicle may include but is not limited to the following: A driver starts the vehicle by turning a key, starts the vehicle by pressing a start button, unlocks a door, opens a door, or powers on the control apparatus. This is not limited in embodiments of this application. For example, completing driving may include but is not limited to the following: A driver turns a key or presses a button to power off the vehicle, locks a door after getting off the vehicle, or powers off the control apparatus. This is not limited in embodiments of this application. For example, the driving process may be a driving cycle between powering on and powering off the vehicle.

The target driving scenario is one of the plurality of preset driving scenarios. The plurality of preset driving scenarios are driving scenarios obtained through analysis based on historical running data of the vehicle. For example, the plurality of preset driving scenarios may be distinguished based on at least a time period and/or a preset location of the vehicle. Specifically, each preset driving scenario may correspond to one time period and/or one preset location. If start time of a driving process falls within a time period corresponding to a preset driving scenario and/or a location of the vehicle during start belongs to a preset location, the driving process belongs to a driving process of the preset driving scenario. For details, refer to the following example description. The following describes, by using an example, a process of obtaining the plurality of preset driving scenarios through analysis.

In a possible implementation, the control apparatus may obtain information about driving processes in a past period of time, and then obtain the plurality of preset driving scenarios through analysis based on the obtained information about the driving processes and a preset driving scenario determining condition.

For example, the past period of time may be, for example, one or more weeks before the control apparatus obtains the information. Alternatively, the past period of time may be, for example, one or more months before the control apparatus obtains the information. The past period of time is not limited in embodiments of this application.

For example, the obtained information about the driving processes may include some or all of the following information in each driving process: start time of the vehicle, location information of the vehicle, driving duration, driving energy consumption, driving mileage, a speed, a battery output power, a battery temperature, an environment temperature (for example, may be a temperature in a cabin, a temperature outside the cabin, or a temperature at a location of a battery), a remaining state of charge of the battery, an air conditioning specified temperature, a seat heating level, a steering wheel heating level, a front windshield heating level, and the like. For example, the information may be information collected via one or more of a controller area network (controller area network, CAN) bus, an input/output (input/output, I/O) bus, a local interconnect network (local interconnect network, LIN) bus, and an Ethernet bus. For example, the information may be information stored in preset storage space after being preprocessed. For example, the preprocessing may include removing an exception value, a missing value, and a duplicate value, and performing processing such as format conversion, unit unification, and time alignment.

In a possible implementation, after the information about the driving processes in the past period of time is obtained, the obtained information may be first filtered, and information that has little reference significance may be filtered out. For example, information about a driving process in which driving duration is greater than preset duration and driving mileage is greater than a preset mileage and is on a working day may be retained, and other information may be discarded. Alternatively, it is not limited to driving mileage on a working day, and information about a driving process in which driving duration is greater than preset duration and driving mileage is greater than a preset mileage may be retained, or the like. A filtering condition is not limited in embodiments of this application. For example, the preset duration may be 10 minutes, 15 minutes, or 20 minutes. This is not limited in embodiments of this application. For example, the preset mileage may be 1 kilometer, 3 kilometers, or 5 kilometers. This is not limited in embodiments of this application either. Optionally, in another possible implementation, no filtering may be performed. The following uses information about a driving process obtained after filtering as an example for description.

After the information about the driving process is obtained after filtering, the plurality of preset driving scenarios may be obtained through analysis based on the preset driving scenario determining condition.

For example, the preset driving scenario determining condition is related to a plurality of time periods. The plurality of time periods are different time periods obtained through division from 24 hours of a day. For example, the 24 hours may be divided into 12 time periods. For example, the 12 time periods may include the following time periods: 00:00 to 01:59:59, 02:00 to 03:59:59, 04:00 to 05:59:59, ..., 20:00 to 21:59:59, and 22:00 to 23:59:59. Alternatively, for example, only time from 06:00 to 22:00 in a day may be divided into time periods to obtain eight time periods. For example, the eight time periods may include the following time periods: 06:00 to 07:59:59, 08:00 to 09:59:59, 10:00 to 11:59:59, ..., 18:00 to 19:59:59, and 20:00 to 21:59:59. It may be understood that division into the time periods herein is merely an example, and does not constitute a limitation on embodiments of this application. In a specific implementation, the time periods may be divided in another manner. This is not limited in embodiments of this application.

A vehicle use frequency degree in each time period is calculated based on the plurality of time periods obtained through division and the driving process obtained after filtering. A vehicle use frequency degree in a time period may be represented by a percentage of a quantity of times that start time of the driving process obtained after filtering falls within the time period. For example, it is assumed that the driving process obtained after filtering includes 100 driving processes, and the plurality of time periods are the foregoing 12 time periods. For example, start time of 40 driving processes falls within the time period of 6:00 to 7:59:59 (referred to as a time period 1), start time of 40 driving processes falls within the time period of 18:00 to 19:59:59 (referred to as a time period 2), start time of 20 driving processes falls within the time period of 10:00 to 11:59:59 (referred to as a time period 3); and no start time of another driving process falls within another time period. In this case, vehicle use frequency degrees in the time period 1 and the time period 2 are both 40/100=0.4. A vehicle use frequency degree in the time period 3 is 20/100=0.2. A vehicle use frequency degree in the another time period is 0.

Alternatively, in another possible implementation, a vehicle use frequency degree in a time period may be represented by a weighted percentage of a quantity of times that start time of the driving process obtained after filtering falls within the time period. It can be learned based on the foregoing descriptions that the past period of time may be, for example, one or more weeks or one or more months before the control apparatus obtains the information. For ease of understanding, an example in which the past period of time is four weeks is used. A vehicle use frequency degree in a period of time may be calculated according to the following formula:

$$r_k = \sum_{i=1}^{4} w_i * \frac{N_{ki}}{5}.$$

Herein, $w_i$ is a weight of an $i$th week, the denominator 5 indicates five working days in a week, and is used to adjust the weight coefficient $w_i$, and $N_{ki}$ is a quantity of times that start time of the vehicle in the $i$th week falls within a $k$th time period. A value range of k is determined based on a quantity of time periods obtained through the foregoing division. For example, if 12 time periods are obtained through the foregoing division, a value of k is an integer ranging from 1 to 12. If eight time periods are obtained through the foregoing division, a value of k is an integer ranging from 1 to 8. It may be understood that the description herein is merely an example, and does not constitute a limitation on embodiments of this application.

For example, a vehicle use frequency degree in each time period may be uniformly represented by using the following formula:

$$P = \{(p_1, r_1), \dots, (p_k, r_k), \dots, (p_n, r_n)\}.$$

P indicates a set of vehicle use frequency degrees, $p_k$ indicates a $k^{th}$ time period, and $r_k$ indicates a vehicle use frequency degree in the $k^{th}$ time period.

After the vehicle use frequency degree in each time period is obtained, the preset driving scenarios may be further determined based on the preset driving scenario determining condition. For example, the preset driving scenario determining condition includes the following two conditions:

(1) A vehicle use frequency degree in a time period is greater than a preset vehicle use frequency degree. (2) In the driving process obtained after the filtering, a dispersion degree of driving mileage of a plurality of driving processes in which start time falls within the time period is less than a preset dispersion degree. For example, the dispersion degree may be represented by a variance, a standard deviation, a mean deviation, or the like.

In another possible implementation, the preset driving scenario determining condition may further include the following condition: (3) The location information of the vehicle during the start belongs to preset location information.

Alternatively, in another possible implementation, the preset driving scenario determining condition includes only the condition (1) and the condition (3).

The preset vehicle use frequency degree, preset dispersion degree, and preset location information may be set based on an actual application. This is not limited in embodiments of this application. It may be understood that the preset driving scenario determining condition is merely an example, and does not constitute a limitation on embodiments of this application.

Only a driving scenario that corresponds to a time period and that meets the preset driving scenario determining condition (namely, a driving scenario in which start time falls within the time period) is determined as the preset driving scenario. The plurality of preset driving scenarios may be determined based on the preset driving scenario determining condition.

In a possible implementation, after the plurality of preset driving scenarios are determined, the determined plurality of preset driving scenarios may be always used. In another possible implementation, it is considered that user's vehicle use habit may change with time. Therefore, a time period originally corresponds to one preset driving scenario, and after the user's vehicle use habit changes, the time period no longer corresponds to the preset driving scenario. Based on this, the plurality of preset driving scenarios may be periodically re-determined in the foregoing manner, so that a determined preset driving scenario better meets user's requirement, thereby improving user experience.

In a specific implementation, the plurality of preset driving scenarios are predetermined, and corresponding time periods and/or corresponding preset location information are stored. Based on this, after the vehicle is started in the first driving process, the control apparatus may obtain start information of the vehicle. The start information may include start time of the vehicle and/or location information of the vehicle during the start. Then, the target driving scenario to which the first driving process belongs is identified in the plurality of preset driving scenarios based on the start information.

In a possible implementation, the target driving scenario to which the first driving process belongs may be identified based on the start time included in the start information. For example, the start time may be matched with a plurality of time periods that one-to-one correspond to the plurality of preset driving scenarios. If the start time belongs to time of a period corresponding to the target driving scenario, it may be identified that a driving scenario to which the first driving process belongs is the target driving scenario.

In a possible implementation, the target driving scenario to which the first driving process belongs may be identified based on the location information of the vehicle included in the start information. For example, the location information of the vehicle may be matched with location information corresponding to the plurality of preset driving scenarios. If the location information of the vehicle belongs to location information corresponding to the target driving scenario, it may be identified that a driving scenario to which the first driving process belongs is the target driving scenario.

In a possible implementation, the target driving scenario to which the first driving process belongs may be identified based on the start time and the location information of the vehicle that are included in the start information. For example, the start time may be matched with a plurality of time periods that one-to-one correspond to the plurality of preset driving scenarios. In addition, the location information of the vehicle may be matched with location information corresponding to the plurality of preset driving scenarios. If the start time belongs to time of a period corresponding to the target driving scenario, and the location information of the vehicle belongs to location information corresponding to the target driving scenario, it may be identified that a driving scenario to which the first driving process belongs is the target driving scenario.

In a possible implementation, if the start time included in the start information does not belong to a time period corresponding to any scenario of the plurality of preset driving scenarios, and/or the location information of the vehicle included in the start information does not belong to location information corresponding to any scenario of the plurality of preset driving scenarios, operations of proceeding to steps S202 and S203 can be stopped, and a next driving process is waited for to start.

It may be understood that the foregoing description of identifying the target driving scenario is merely an example, and does not constitute a limitation on embodiments of this application.

S202: The control apparatus obtains target driving situation information, where the target driving situation information includes driving situation information of m historical driving processes that belong to the target driving scenario, and m is an integer greater than 1.

In a specific implementation, after the target driving scenario to which the first driving process belongs is identified, the driving situation information of the m historical driving processes of the target driving scenario may be obtained, that is, the target driving situation information is obtained. The target driving situation information may be used to predict a driving situation of the first driving process, and may be used as reference information for thermal management of the first driving process.

For example, the m historical driving processes are a plurality of driving processes that are before the first driving process and that belong to the target driving scenario. For example, in the m historical driving processes, the start time of the vehicle falls within a time period corresponding to the target driving scenario, and/or the location information of the vehicle during the starting belongs to location information corresponding to the target driving scenario. For example, the m historical driving processes are a plurality of driving processes in one or more weeks or one or more months before the first driving process. For example, the m historical driving processes may be filtered historical driving processes. For details, refer to the foregoing implementation process of analyzing the plurality of preset driving scenarios. Details are not described herein again.

Driving situation information of each historical driving process may include but is not limited to one or more pieces of the following information: energy consumption information, a battery output power, thermal comfort preference information, driving mileage, driving duration, and the like. Energy consumption information of one historical driving process may be, for example, a magnitude of total energy consumption of the historical driving process. For example, the total energy consumption of the driving process may include but is not limited to one or more of the following: energy consumption generated for implementing driving, lighting, ventilation, thermal management, and the like of the vehicle. It may be understood that the description herein is merely an example. The total energy consumption of the driving process may further include energy consumption generated for implementing another function. This is not limited in embodiments of this application.

For example, a battery output power of one historical driving process may include one or more of the following: a maximum battery output power value, a first battery output power, and a second battery output power of the historical driving process. The first battery output power is a battery output power in driving duration that covers a first driving duration ratio of the historical driving process. The second battery output power is a battery output power in driving duration that covers a second driving duration ratio of the historical driving process. For example, values of the first driving duration ratio and the second driving duration ratio may be, for example, a driving duration ratio of 99% to 99.9% of the historical driving process. For ease of understanding, an example is used for description. It is assumed that driving duration of the historical driving process is 10 minutes, and for example, the first driving duration ratio is 99.9%. In this case, the first battery output power is a battery output power covering 9.99 minutes of the historical driving process. In other words, in the 10 minutes of the historical driving process, the battery output power in the 9.99 minutes is the first battery output power. The second driving duration ratio is similar, and details are not described again. The second driving duration ratio is less than the first driving duration ratio.

For example, thermal comfort preference information indicates preference of a user for a hot/cold sensation level in a cabin. In a possible implementation, a predicted mean vote (predicted mean vote, PMV) index (which may also be referred to as a predictive mean vote index or the like) may be used as an indicator for measuring user's preference for a hot/cold sensation. Thermal comfort preference information of one historical driving process may be determined based on a cabin environment in the historical driving process. For example, a PMV value of the historical driving process may be calculated based on environment information such as a local temperature and humidity of a cabin stored in the historical driving process. For an example of a calculation formula, refer to the following description. Details are not described herein. The PMV value may be used as the thermal comfort preference information of the historical driving process.

Alternatively, in another possible implementation, thermal comfort preference information of one historical driving process may directly include one or more pieces of the following information: a cabin temperature, humidity, an air conditioning temperature adjustment record, an air volume adjustment record, an air direction adjustment record, a steering wheel heating level adjustment record, a seat heating level adjustment record, a front windshield heating level adjustment record, and the like of the historical driving process. The one or more pieces of information may be referred to as an operation record of a cabin heating device.

Based on the foregoing description, the target driving situation information may include one or more of the following: m pieces of energy consumption information, m battery output powers, and m pieces of thermal comfort preference information. An $i^{th}$ piece of energy consumption information belongs to energy consumption information of an $i^{th}$ historical driving process. An $i^{th}$ battery output power belongs to a battery output power of the $i^{th}$ historical driving process. An $i^{th}$ piece of thermal comfort preference information is thermal comfort preference information of the $i^{th}$ historical driving process. A value of i is an integer from 1 to m.

For example, based on the foregoing description, the historical driving process may include one or more of the maximum battery output power, the first battery output power, and the second battery output power of the historical driving process. If the maximum battery output power value is included, the m battery output powers include m maximum battery output powers. If the first battery output power is included, the m battery output powers include m first battery output powers. If the second battery output power is included, the m battery output powers include m second battery output powers. In other words, the m battery output powers may include one or more of the following: the m maximum battery output powers, the m first battery output powers, and the m second battery output powers. The $i^{th}$ battery output power may include one or more of the following: a maximum battery output power, a first battery output power, and a second battery output power of the $i^{th}$ historical driving process.

S203: The control apparatus controls a target thermal management operation based on the target driving situation information and battery status information obtained after the vehicle is started, where the target thermal management operation includes a battery heating operation on the vehicle and/or a cabin temperature adjustment operation on the vehicle in the first driving process.

In a specific implementation, the control apparatus may predict a driving situation of the first driving process based on the target driving situation information, and obtained driving situation prediction information may be used as reference information for thermal management in the first driving process.

In a possible implementation, the control apparatus may predict, based on the m pieces of energy consumption information, target total energy consumption required in the first driving process. For example, the target total energy consumption may be, for example, a median (also referred to as a median value) of the m pieces of energy consumption information. Alternatively, the target total energy consumption may be, for example, an average value of the m pieces of energy consumption information. Alternatively, the target total energy consumption may be, for example, a weighted average value of the m pieces of energy consumption information. It may be understood that the description herein is merely an example, and does not constitute a limitation on embodiments of this application.

In a possible implementation, the control apparatus may obtain, through prediction based on the m battery output powers, a battery output power (referred to as a target battery output power) required in the first driving process. For example, if the m battery output powers include the m maximum battery output powers, the target battery output power includes a median, an average value, or a weighted average value (referred to as a target maximum battery output power) of the m maximum battery output powers. If the m battery output powers include the m first battery output powers, the target battery output power includes a median, an average value, or a weighted average value (referred to as a target first battery output power) of the m first battery output powers. If the m battery output powers include the m second battery output powers, the target battery output power includes a median, an average value, or a weighted average value (referred to as a target second battery output power) of the m second battery output powers. In other words, the target battery output power may include one or more of the target maximum battery output power, the target first battery output power, and the target second battery output power.

In a possible implementation, the control apparatus may obtain, through prediction based on the m pieces of thermal comfort preference information, thermal comfort preference information (referred to as target thermal comfort preference information) in the first driving process. For example, if the m pieces of thermal comfort preference information are m PMV values in the m historical driving processes, the target thermal comfort preference information may be, for example, a median, an average value, or a weighted average value (referred to as a target PMV value) of the m PMV values. If the m pieces of thermal comfort preference information are cabin temperatures, humidity, and adjustment records of heating devices in the m historical driving processes, medians, average values, or weighted average values of the cabin temperatures, humidity, and adjustment records of heating devices in the m historical driving processes may be calculated, and a plurality of obtained calculation results are the target thermal comfort preference information. Details are not described herein again.

For example, the driving situation prediction information may include one or more of the target total energy consumption, the target battery output power, and the target thermal comfort preference information. After the driving situation prediction information is obtained, the thermal management operation on the vehicle may be controlled based on the driving situation prediction information and the battery status information of the vehicle after the vehicle is started.

The battery status information may include one or more of the following: a battery temperature, a remaining state of charge and an allowed output power of the battery, and the like. For example, the remaining state of charge of the battery may be represented by a state of charge (state of charge, SoC). For example, the allowed output power may be represented by a state of power (state of power, SoP), and indicates a discharging capability of the battery. For example, an SoP table may be pre-stored in the vehicle. The SoP table stores a correspondence between a battery temperature and an allowed output power of the battery. Therefore, the control apparatus may query the SoP table based on an obtained battery temperature, to obtain the allowed output power of the battery.

For example, the target thermal management operation includes the battery heating operation and/or the cabin temperature adjustment operation on the vehicle in the first driving process. The cabin temperature adjustment operation includes an adjustment operation on a heating device in the cabin, for example, may include one or more of the following: an air conditioning heating operation, a steering wheel heating operation, a seat heating operation, a front windshield heating operation, and the like. It may be understood that the description herein is merely an example, and does not constitute a limitation on embodiments of this application.

In a possible implementation, if the driving situation prediction information includes the target total energy consumption, whether the battery can meet an energy consumption requirement of the first driving process may be determined based on the battery status information and the target total energy consumption. Then, the corresponding thermal management operation is controlled based on a determining result. For example, energy that can be provided by the battery may be determined based on the remaining state of charge of the battery. For example, the energy that can be provided by the remaining state of charge of the battery may be queried from a table of a correspondence between a state of charge and energy. Alternatively, the energy that can be provided may be directly obtained through calculation based on the remaining state of charge of the battery. This is not limited in embodiments of this application. For ease of subsequent description, the energy that can be provided by the remaining state of charge of the battery is referred to as remaining energy for short.

In a possible implementation, if energy consumption generated by the thermal management operation is considered in a process of predicting the target total energy consumption, after the remaining energy is determined, the remaining energy may be compared with the target total energy consumption. If the remaining energy is less than the target total energy consumption, it indicates that the remaining state of charge of the battery cannot meet a requirement of the target total energy consumption. In this case, the control apparatus does not start the target thermal management operation. This saves energy consumption generated by the thermal management operation, preferentially ensures energy consumption required for a driving operation, and extends driving mileage as much as possible.

If the remaining energy is greater than the target total energy consumption, it indicates that the remaining state of charge of the battery can meet a requirement of the target total energy consumption. In this case, the control apparatus may start the target thermal management operation. For example, the thermal management system 100 shown in FIG. 1 is used as an example. The control apparatus may generate a control instruction, and send the control instruction to the battery thermal management execution module 120 and/or the cabin thermal management execution module 130, to instruct the battery thermal management execution module 120 and/or the cabin thermal management execution module 130 to perform the corresponding thermal management operation. For the specific thermal management operation performed by the two modules, refer to the foregoing descriptions in FIG. 1. Details are not described herein again.

In another possible implementation, if energy consumption generated by the thermal management operation is not considered in a process of predicting the target total energy consumption, energy consumption generated by the target thermal management operation may be further considered in addition to the target total energy consumption in a process of determining whether the battery can meet an energy consumption requirement of the first driving process. In other words, a sum of the target total energy consumption and the energy consumption generated by the target thermal management operation is the estimated energy consumption requirement of the first driving process. For ease of subsequent description, the sum of the energy consumption is referred to as comprehensive energy consumption. Based on this, after the remaining energy is determined, the remaining energy may be compared with the comprehensive energy consumption. If the remaining energy is less than the comprehensive energy consumption, it indicates that the remaining state of charge of the battery cannot meet the requirement of the comprehensive energy consumption. In this case, the control apparatus does not start the target thermal management operation. This saves energy consumption generated by the thermal management operation, preferentially ensures energy consumption required for a driving operation, and extends driving mileage as much as possible. If the remaining energy is greater than the comprehensive energy consumption, it indicates that the remaining state of charge of the battery can meet the requirement of the comprehensive energy consumption. In this case, the control apparatus may start the target thermal management operation. For ease of understanding, the following provides an example for description.

In a possible implementation, the target thermal management operation includes the battery heating operation. In this case, the energy consumption generated by the target thermal management operation includes energy consumption (referred to as battery heating energy consumption for short) required for the battery heating operation. The comprehensive energy consumption may be a sum of the target total energy consumption and the battery heating energy consumption. Based on this, after the remaining energy is determined, the remaining energy may be compared with the comprehensive energy consumption. If the remaining energy is less than the comprehensive energy consumption, it indicates that the remaining state of charge of the battery cannot meet the requirement of the comprehensive energy consumption. In this case, the control apparatus does not start the battery heating operation. This saves energy consumption required for heating the battery, preferentially ensures energy consumption required for a driving operation, and extends driving mileage as much as possible.

If the remaining energy is greater than the comprehensive energy consumption, it indicates that the remaining state of charge of the battery can meet the requirement of the comprehensive energy consumption. In this case, the control apparatus may start the battery heating operation. For example, the thermal management system 100 shown in FIG. 1 is used as an example. The control apparatus may generate a control instruction, and send the control instruction to the battery thermal management execution module 120, to instruct the battery thermal management execution module 120 to perform the battery heating operation. In a possible implementation, the battery heating operation may heat the battery to a specified temperature. The temperature may be preset. For example, the battery heating energy consumption may be determined based on a difference between the specified temperature and a temperature of the battery before heating. For example, a table of a correspondence between the temperature difference and the energy consumption required for heating may be preset, and the battery heating energy consumption may be obtained by querying the table based on the temperature difference. It may be understood that the description herein is merely an example, and does not constitute a limitation on embodiments of this application.

In a possible implementation, in the foregoing process of determining whether to start the battery heating operation, in addition to the foregoing requirement of the comprehensive energy consumption, the allowed output power of the battery may be further considered. In other words, the driving situation prediction information further includes the target battery output power. In addition, the battery status information further includes the allowed output power of the battery. Based on this, the allowed output power may be compared with the target battery output power, to determine whether the allowed output power meets the requirement of the target battery output power.

For example, based on the foregoing descriptions, the target battery output power may include one or more of the target maximum battery output power, the target first battery output power, and the target second battery output power. In a possible implementation, the target battery output power includes only one of the three items. For example, the target battery output power includes the target maximum battery output power. The other two items are similar, and details are not described again. In this case, the allowed output power may be compared with the target maximum battery output power. If the allowed output power is greater than the target maximum battery output power, it indicates that the output power of the battery can meet the battery output power required for the first driving process, regardless of whether the remaining energy can meet the requirement of the comprehensive energy consumption. The control apparatus does not start the battery heating operation. Specifically, if the output power and the remaining energy of the battery can both meet a requirement of the first driving process, the battery does not need to be additionally heated. If the output power of the battery meets the requirement of the first driving process, but the remaining energy does not meet the requirement, the battery is still not heated. This saves energy consumption required for heating the battery, preferentially ensures energy consumption required for a driving operation, and extends driving mileage as much as possible.

If the allowed output power is less than the target maximum battery output power, it indicates that the output power of the battery cannot meet the battery output power required for the first driving process. In this case, if the remaining energy can meet the requirement of the comprehensive energy consumption, the battery heating operation may be started. This optimizes discharge performance of the battery. If the remaining energy cannot meet the requirement of the overall energy consumption, the battery is not heated. This saves energy consumption required for heating the battery, preferentially ensures energy consumption required for a driving operation, and extends driving mileage as much as possible.

For ease of understanding, the following Table 1 shows examples of several implementations in which the remaining energy and the allowed output power of the battery are comprehensively considered to determine whether to heat the battery.

Table 1

| Allowed output power of the battery | Remaining energy of the battery | Whether to start the battery heating operation |
|---|---|---|
| <Target maximum battery output power | >Comprehensive energy consumption | Starts heating |
| <Target maximum battery output power | <Comprehensive energy consumption | Do not start heating |
| >Target maximum battery output power | <Comprehensive energy consumption | Do not start heating |
| >Target maximum battery output power | >Comprehensive energy consumption | Do not start heating |

It can be seen from Table 1 that the battery heating operation is started only when the allowed output power of the battery is less than the target maximum battery output power and the remaining energy of the battery is greater than the comprehensive energy consumption. In other cases, the battery heating operation is not started. For beneficial effect in each case, refer to the foregoing descriptions. Details are not described herein again.

In a possible implementation, the target battery output power may include any two of the target maximum battery output power, the target first battery output power, and the target second battery output power. For example, the target battery output power includes the target maximum battery output power and the target first battery output power. The rest is similar, and details are not described again. For example, refer to Table. 2.

Table 2

| Allowed output power of the battery | Remaining energy of the battery | Whether to start the battery heating operation |
|---|---|---|
| <Target maximum battery output power, and <Target first battery output power | >Comprehensive energy consumption | Starts heating |
| Other | Other | Do not start heating |

It can be seen from Table 2 that the battery heating operation is started only when Allowed output power of the battery<Target maximum battery output power, and Allowed output power of the battery<Target first battery output power, and Remaining energy of the battery>Comprehensive energy consumption. In other cases, the battery heating operation is not started.

In a possible implementation, the target battery output power may include the three powers: the target maximum battery output power, the target first battery output power, and the target second battery output power. For example, if the three powers are all greater than the allowed output power of the battery, that is, the allowed output power of the battery is less than the three powers, the control apparatus starts the battery heating operation. In other cases, the battery heating operation is not started. Alternatively, for example, the control apparatus starts the battery heating operation as long as the allowed output power of the battery is less than any two of the three powers. In other cases, the battery heating operation is not started.

In a possible implementation, the control apparatus may further determine, based on the target battery output power, a target temperature to which the battery is heated. It can be learned based on the foregoing description that the SoP table stores the correspondence between the battery temperature and the allowed output power of the battery. Therefore, the target temperature can be obtained by querying the SoP table based on the target battery output power. For example, the target battery output power may include one or more of the target maximum battery output power, the target first battery output power, and the target second battery output power. Therefore, any one of the three output powers may be used to query the SoP table; or at least two of the three items may be used to query the SoP table. If a plurality of different temperatures are obtained, a median, an average value, a weighted average value, or the like of the plurality of temperatures may be used as the target temperature. This is not limited in embodiments of this application. After the target temperature is obtained, when the control apparatus sends the control instruction to the battery thermal management execution module 120, the control instruction may carry indication information of the target temperature, to indicate the battery thermal management execution module 120 to heat the battery to the target temperature.

In a possible implementation, after the battery is heated, performance of the battery increases, and therefore energy that can be provided by the battery can be increased. Increased energy may be referred to as heating gain energy for short. For example, the heating gain energy may be obtained in advance by performing an experiment on a battery pack in a calibration manner. Therefore, in an implementation process of determining, based on the battery status information and the target total energy consumption, whether the battery can meet the energy consumption requirement of the first driving process, the heating gain energy may be further considered. For example, it may be first assumed that the control apparatus starts the battery heating operation. Based on this, the heating gain energy obtained after the battery is heated may be first estimated. In this case, the remaining energy of the battery may be a sum of the remaining energy of the battery before heating and the heating gain energy. Then, whether the energy consumption requirement of the first driving process can be met may be determined based on the remaining energy of the battery, to further control whether to start the battery heating operation. For a specific implementation, refer to the foregoing descriptions. Details are not described herein.

In a possible implementation, a preset environment temperature condition further needs to be met for the control apparatus to start the battery heating operation. For example, after the vehicle is started in the first driving process, the control apparatus may obtain a temperature of an environment in which the vehicle is located (for descriptions of the environment temperature, refer to the foregoing descriptions, and details are not described herein again). If the obtained environment temperature is less than a preset temperature threshold and the condition of starting the battery heating operation is met, the control apparatus starts the battery heating operation. Otherwise, if the obtained environment temperature is greater than the preset temperature threshold, the control apparatus does not start the battery heating operation. The preset temperature threshold may be set based on an actual application. This is not limited in embodiments of this application. This implementation can ensure that the battery is heated only in a low-temperature environment, effectively improve battery performance only by heating the battery in the low-temperature environment, and reduce impact of the low-temperature environment on battery performance. For a more intuitive understanding of this implementation, refer to FIG. 3 as an example. For specific implementations of steps in FIG. 3, refer to the foregoing descriptions. Details are not described herein again.

In a possible implementation, the target thermal management operation includes the cabin temperature adjustment operation. In this case, the energy consumption generated by the target thermal management operation includes energy consumption (referred to as cabin temperature adjustment energy consumption for short) required for the cabin temperature adjustment operation. The comprehensive energy consumption may be a sum of the target total energy consumption and the cabin temperature adjustment energy consumption. Based on this, after the remaining energy of the battery is determined, the remaining energy may be compared with the comprehensive energy consumption. If the remaining energy is less than the comprehensive energy consumption, it indicates that the remaining state of charge of the battery cannot meet the requirement of the comprehensive energy consumption. In this case, the control apparatus does not start the cabin temperature adjustment operation. Alternatively, based on the foregoing descriptions, the cabin temperature adjustment operation may include one or more of the following: an air conditioning heating operation, a steering wheel heating operation, a seat heating operation, a front windshield heating operation, and the like. If the remaining energy is less than the comprehensive energy consumption, the control apparatus may select, according to a preset policy, to perform some of the operations, for example, preferentially start the steering wheel heating operation and the seat heating operation, and not start the air conditioning heating operation, or decrease an air conditioning heating temperature. This saves energy consumption required for the cabin temperature adjustment operation, preferentially ensures energy consumption required for a driving operation, and extends driving mileage as much as possible.

If the remaining energy is greater than the comprehensive energy consumption, it indicates that the remaining state of charge of the battery can meet the requirement of the comprehensive energy consumption. In this case, the control apparatus may start the cabin temperature adjustment operation. For example, the thermal management system 100 shown in FIG. 1 is used as an example. The control apparatus may generate a control instruction, and send the control instruction to the cabin thermal management execution module 130, to instruct the cabin thermal management execution module 130 to perform the cabin temperature adjustment operation. In a possible implementation, when the remaining energy is greater than the comprehensive energy consumption, the control apparatus may also select, according to a preset policy, to perform some of these operations. The preset policy may be set based on an actual application requirement. This is not limited in embodiments of this application.

In a possible implementation, if the cabin temperature adjustment operation includes the air conditioning heating operation, heating may be performed based on a pre-specified temperature and/or air speed. The cabin temperature adjustment energy consumption includes energy consumption required for the air conditioning heating operation. For example, the energy consumption required for the air conditioning heating operation may be determined based on the temperature and/or air speed. For example, a table of a relationship between an air conditioning temperature and/or air speed and energy consumption required for heating may be preset, and the required energy consumption may be obtained by querying the table. It may be understood that the description herein is merely an example, and does not constitute a limitation on embodiments of this application.

In a possible implementation, if the cabin temperature adjustment operation includes the steering wheel heating operation, a steering wheel may be heated based on a pre-designated heating level. The cabin temperature adjustment energy consumption includes energy consumption required for heating the steering wheel. For example, the energy consumption required for heating the steering wheel may be determined based on the level. For example, a table of a relationship between a heating level and energy consumption required for heating may be preset, and the required energy consumption may be obtained by querying the table. The seat heating operation, the front windshield heating operation, and the like are similar, and details are not described again. It may be understood that the description herein is merely an example, and does not constitute a limitation on embodiments of this application.

In a possible implementation, in a process of determining whether to start the cabin temperature adjustment operation, in addition to the requirement of the comprehensive energy consumption, user's thermal comfort preference may be further considered. In other words, the driving situation prediction information further includes the target thermal comfort preference information. The target thermal comfort preference information reflects user's thermal comfort preference in the driving process. Therefore, related parameters for cabin temperature adjustment may be determined based on the information. For example, the temperature and/or air speed for the air conditioning heating operation may be determined, or the heating level for the steering wheel heating operation, a heating level for the seat heating operation, and a heating level for the front windshield heating operation may be determined.

The following uses an example in which the target thermal comfort preference information is the target PMV value to describe an implementation process in which the requirement of the comprehensive energy consumption and user's thermal comfort preference are comprehensively considered, to control the cabin temperature adjustment operation.

For example, it is assumed that the cabin temperature adjustment operation includes the air conditioning heating operation. In this case, after obtaining the target PMV value, the control apparatus may determine, based on the target PMV value and a current temperature in the cabin, the target air outlet temperature and/or target air speed for air conditioning heating, for example, query a first preset relationship table based on the target PMV value and the current temperature in the cabin, to obtain the target air outlet temperature and/or the target air speed. The first preset relationship table may also be referred to as a map (map) table. Air conditioning air outlet temperatures and/or air speeds corresponding to a plurality of PMV values and a plurality of cabin temperatures are recorded in the first preset relationship table. For ease of understanding, refer to FIG. 3.

Table 3

| PMV value | Cabin temperature | Air conditioning air outlet temperature | Air conditioning air speed |
|---|---|---|---|
| PMV 1 | Cabin temperature 1 | Air outlet temperature 1 | Air speed 1 |
| PMV 2 | Cabin temperature 2 | Air outlet temperature 2 | Air speed 2 |
| ... | ... | ... | ... |

It can be seen from Table 3 that, after a PMV value and a cabin temperature are learned of, a corresponding air conditioning air outlet temperature and air speed can be found. Table 3 is merely an example, and does not constitute a limitation on embodiments of this application.

For example, the first preset relationship table may be set when the vehicle is delivered, or may be set in the vehicle through parameter setting or over the air (over the air, OTA) upgrade. A setting manner of the first preset relationship table is not limited in embodiments of this application. A setting manner of another relationship table in this application is similar, and details are not described again.

In a possible implementation, the first preset relationship table may be further updated as user's data in the vehicle increases. For example, the first preset relationship table may be updated in real time or periodically based on a record of adjusting air conditioning by a user in each driving process. This is not limited in embodiments of this application.

After obtaining the target air outlet temperature and/or the target air speed, the control apparatus may determine, based on the target air outlet temperature and/or the target air speed, the energy consumption required for the air conditioning heating operation. For example, a table of a relationship between an air conditioning temperature and/or air speed and energy consumption required for heating may be preset, and the required energy consumption may be obtained by querying the table.

For example, it is assumed that the cabin temperature adjustment operation further includes a heating operation on a target apparatus. The target apparatus includes at least one of a steering wheel, a seat, and a front windshield. In this case, after obtaining the target PMV value, the control apparatus may determine a target heating level of the target apparatus based on the target PMV value and a current PMV value.

For example, the current PMV value is determined based on a cabin environment and a human body factor after the vehicle is started in the first driving process. For example, the PMV value is obtained through calculation based on a human body heat balance equation and experimental data of human body heat sensation, and by comprehensively considering six factors: an air temperature, a mean radiant temperature, an air flow rate, air humidity, a metabolic rate, and clothing thermal resistance. Therefore, after the vehicle is started, values of the six factors: the air temperature, the mean radiant temperature, the air flow rate, the air humidity, the metabolic rate, and the clothing thermal resistance in the vehicle are estimated based on detection values of sensors in the vehicle, and then the following formula is used to obtain the current PMV value through calculation:

$$PMV=[0.303 \times e^{-0.036M}+0.0275] \times [(M–W)–C–R–E_{sk}–E_{res}]$$

M is the metabolic rate, W is external work, C and R are a convective heat loss and radiative heat loss from a skin surface, and $E_{sk}$ and $E_{res}$ are a skin and respiratory evaporative heat loss. All these heat losses can be obtained through calculation according to existing theoretical formulas. It may be understood that the PMV calculation manner described herein is merely an example, and does not constitute a limitation on embodiments of this application. Embodiments of this application may also apply another PMV value calculation method. This is not limited in embodiments of this application.

For example, after obtaining the current PMV value, the control apparatus may calculate a deviation between the current PMV value and the target PMV value. For example, the deviation may be a difference obtained by subtracting the target PMV value from the current PMV value, or a difference obtained by subtracting the current PMV value from the target PMV value, or an absolute value of a difference between the two PMV values. This is not limited in embodiments of this application.

The target PMV value is predicted user thermal comfort preference, and the current PMV value reflects a current thermal comfort status in the vehicle cabin. Therefore, the deviation reflects a deviation between the current thermal comfort status in the vehicle cabin and user's expected thermal comfort status. It can be learned that a larger deviation indicates a larger deviation from user's expected thermal comfort status, namely, poorer thermal comfort experience. In a low-temperature environment, a larger deviation indicates a lower temperature in the vehicle cabin, and the target apparatus needs to be heated at a higher heating level, to provide more heat for the user. Based on this, a second preset relationship table may be queried based on the deviation, to determine the specific heating level. Heating levels, corresponding to a plurality of thermal comfort deviation ranges, of the target apparatus are recorded in the second preset relationship table. For ease of understanding, refer to FIG. 4.

Table 4

| Thermal comfort deviation range | Steering wheel heating level | Seat heating level | Front windshield heating level |
|---|---|---|---|
| Deviation range 1 | Level 1 | Level 3 | Level 5 |
| Deviation range 2 | Level 2 | Level 4 | Level 6 |
| ... | ... | ... | ... |

It can be seen from Table 4 that after a thermal comfort deviation is learned of, a heating level corresponding to the steering wheel, the seat, or the front windshield can be found by determining a deviation range to which the thermal comfort deviation belongs. Heating levels that are of the steering wheel, the seat, and the front windshield and that correspond to a same deviation may be the same or may be different, and may be set based on an actual application. This is not limited in embodiments of this application. Table 4 is merely an example, and does not constitute a limitation on embodiments of this application.

For example, a higher heating level of the target apparatus indicates that more heat can be provided for the user, and more energy consumption is required. For example, a heating level of the target apparatus may be classified into three levels: a high level, a medium level, and a low level, or may be classified into a plurality of levels such as a first level, a second level, and a third level. A quantity and division of the heating levels are not limited in embodiments of this application. It may be understood that the heating level may be replaced with a heating temperature, a magnitude of provided heat, or the like. This is not limited in embodiments of this application. In embodiments of this application, the heating level is mainly used as an example for description.

After obtaining the target heating level of the target apparatus, the control apparatus may determine, based on the target heating level, energy consumption required for the heating operation on the target apparatus. For example, a table of a relationship between a heating level of a target apparatus and energy consumption required for heating may be preset, and the required energy consumption may be obtained by querying the table. In another possible implementation, to save compute resources, the control apparatus may directly determine, based on a highest level of the target apparatus, the energy consumption required for the heating operation on the target apparatus. It may be understood that a manner of determining the energy consumption herein is merely an example, and does not constitute a limitation on embodiments of this application.

In a possible implementation, after the energy consumption required for the air conditioning heating operation and the energy consumption required for the heating operation on the target apparatus are obtained, the two pieces of energy consumption and the target total energy consumption are added to obtain the comprehensive energy consumption. Then, the comprehensive energy consumption is compared with the remaining energy of the battery. If the remaining energy is less than the comprehensive energy consumption, it indicates that the remaining state of charge of the battery cannot meet the requirement of the comprehensive energy consumption. In this case, the control apparatus does not start the air conditioning heating operation and the heating operation on the target apparatus. Alternatively, the control apparatus may select, according to a preset policy, to perform some of these operations. For example, the control apparatus may preferentially start the heating operation on the target apparatus, and do not start the air conditioning heating operation, or decrease an air conditioning heating temperature. This saves energy consumption required for the cabin temperature adjustment operation, preferentially ensures energy consumption required for a driving operation, and extends driving mileage as much as possible.

If the remaining energy is greater than the comprehensive energy consumption, it indicates that the remaining state of charge of the battery can meet the requirement of the comprehensive energy consumption. In this case, the control apparatus may start the air conditioning heating operation and the heating operation on the target apparatus. In another possible implementation, when the remaining energy is greater than the comprehensive energy consumption, the control apparatus may also select, according to a preset policy, to perform some of these operations. The preset policy may be set based on an actual application requirement. This is not limited in embodiments of this application.

To more intuitively understand an implementation process in which the requirement of comprehensive energy consumption and user's thermal comfort preference are comprehensively considered, to control the cabin temperature adjustment operation, the following uses Table 5 as an example for description.

Table 5

| Thermal comfort deviation range | End-point state of charge | Air conditioning heating operation | Heating operation on a target apparatus |
|---|---|---|---|
| Absolute value of a deviation>First threshold | State of charge<0 | Not started | High-level heating |
| | 0≤State of charge≤Q1 | Perform heating by decreasing a temperature and/or an air speed | Medium-level heating |
| | State of charge>Q1 | Perform heating based on a target air outlet temperature and/or a target air speed | Low-level heating |
| Second threshold≤Absolute value of a deviation≤First threshold | State of charge<0 | Not started | Medium-level heating |
| | 0≤State of charge≤Q1 | Perform heating by decreasing a temperature and/or an air speed | Low-level heating |
| | State of charge>Q1 | Perform heating based on a target air outlet temperature and/or a target air speed | Not started |
| 0<Absolute value of a deviation≤Second threshold | State of charge<0 | Not started | Low-level heating |
| | 0≤State of charge≤Q1 | Perform heating by decreasing a temperature and/or an air speed | Not started |
| | State of charge>Q 1 | Perform heating based on a target air outlet temperature and/or a target air speed | Not started |

In Table 5 above, three ranges of a thermal comfort deviation range are provided as examples: Absolute value of a deviation>First threshold, Second threshold≤Absolute value of a deviation≤First threshold, and 0<Absolute value of a deviation≤Second threshold. The first threshold and the second threshold may be set based on an actual application. This is not limited in embodiments of this application. For example, the absolute value of the deviation may be an absolute value of a difference between the current PMV value and the target PMV value.

In addition, in Table 5, the end-point state of charge represents the state of charge remained after the vehicle arrives at the end of a trip in the first driving process. The end-point state of charge may be obtained through calculation based on a difference between the remaining energy of the battery and the comprehensive energy consumption. A larger difference indicates a larger end-point state of charge obtained through calculation, and a smaller difference indicates a smaller end-point state of charge obtained through calculation. A calculation process is not described in embodiments of this application. In another possible implementation, the end-point state of charge in Table 5 may be replaced with the difference between the remaining energy of the battery and the comprehensive energy consumption. A specific implementation logic is similar, and details are not described again. Three ranges of the end-point state of charge are provided as examples: State of charge<0, 0≤State of charge≤Q1, and State of charge>Q1. A value of Q1 may be set based on an actual application. This is not limited in embodiments of this application.

In Table 5, descriptions of corresponding air conditioning heating operations and heating operations on the target apparatus are also provided based on the different thermal comfort deviation ranges and end-point battery capacities. The following separately provides descriptions.

For example, if Absolute value of a deviation>First threshold, and End-point state of charge<0, it indicates that cabin thermal comfort is poor, and the remaining state of charge of the battery is insufficient to meet the energy consumption requirement in the first driving process. In this case, the air conditioning heating operation is not started. However, for user's heating requirement, the target apparatus may be heated at a high level.

For example, if Absolute value of a deviation>First threshold, and 0≤End-point state of charge≤Q1, it indicates that cabin thermal comfort is poor, and the remaining state of charge of the battery can meet the energy consumption requirement in the first driving process. However, the remaining state of charge is small. To meet an unexpected energy consumption requirement, the air conditioning heating operation may be started by decreasing the temperature and/or air speed. Herein, it means decreasing a specific temperature and/or air speed based on the determined target air outlet temperature and/or air speed. A specific decrease amount may be set based on an actual situation, or may be determined based on a value of the end-point state of charge. This is not limited in embodiments of this application. In addition, the target apparatus may be heated at a medium level. Because the air conditioning heating operation is started, a heating level of the target apparatus may be decreased to the medium level.

For example, if Absolute value of a deviation>First threshold, and End-point state of charge>Q1, it indicates that cabin thermal comfort is poor, and the remaining state of charge of the battery is sufficient to meet the energy consumption requirement in the first driving process. In this case, the heating operation may be started and controlled based on the target air outlet temperature and/or the target air speed to perform heating. In addition, the target apparatus may be heated at a low level. Because the air conditioning heating operation is started, and the temperature and/or the air speed are/is not low, a heating level of the target apparatus may be decreased to the low level.

For example, if Second threshold≤Absolute value of a deviation≤First threshold, and End-point state of charge<0, it indicates that cabin thermal comfort is better than that in the case of Absolute value of a deviation>First threshold, but still does not meet user's comfort preference, and the remaining state of charge of the battery is insufficient to meet the energy consumption requirement in the first driving process. In this case, the air conditioning heating operation is still not started. However, for user's heating requirement, the target apparatus may be heated at a medium level.

For example, if Second threshold≤Absolute value of a deviation≤First threshold, and 0≤End-point state of charge≤Q1, it indicates that cabin thermal comfort is better than that in the case of Absolute value of a deviation>First threshold, but still does not meet user's comfort preference, and the remaining state of charge of the battery can meet the energy consumption requirement in the first driving process. However, the remaining state of charge is small. To meet an unexpected energy consumption requirement, the air conditioning heating operation may be started by decreasing the temperature and/or air speed. Herein, it means decreasing a specific temperature and/or air speed based on the determined target air outlet temperature and/or air speed. A specific decrease amount may be set based on an actual situation, or may be determined based on a value of the end-point state of charge. This is not limited in embodiments of this application. In addition, the target apparatus may be heated at a low level. Because the air conditioning heating operation is started, a heating level of the target apparatus may be decreased to the low level.

For example, if Second threshold≤Absolute value of a deviation≤First threshold, and End-point state of charge>Q1, it indicates that cabin thermal comfort is better than that in the case of Absolute value of a deviation>First threshold, but still does not meet user's comfort preference, and the remaining state of charge of the battery is sufficient to meet the energy consumption requirement in the first driving process. In this case, the heating operation may be started and controlled based on the target air outlet temperature and/or the target air speed to perform heating. Because the air conditioning heating operation is started, and the temperature and/or the air speed are/is not low, the heating operation on the target apparatus may not be started.

For example, if 0<Absolute value of a deviation≤Second threshold, and End-point state of charge<0, it indicates that cabin thermal comfort is close to user's thermal comfort preference, and the remaining state of charge of the battery is insufficient to meet the energy consumption requirement in the first driving process. In this case, the air conditioning heating operation is still not started. However, for user's heating requirement, the target apparatus may be heated at a low level.

For example, if 0<Absolute value of a deviation≤Second threshold, and 0≤End-point state of charge≤Q1, it indicates that cabin thermal comfort is close to user's thermal comfort preference, and the remaining state of charge of the battery can meet the energy consumption requirement in the first driving process. However, the remaining state of charge is small. To meet an unexpected energy consumption requirement, the air conditioning heating operation may be started by decreasing the temperature and/or air speed. Herein, it means decreasing a specific temperature and/or air speed based on the determined target air outlet temperature and/or air speed. A specific decrease amount may be set based on an actual situation, or may be determined based on a value of the end-point state of charge. This is not limited in embodiments of this application. In addition, the target apparatus may be heated at a low level. Because the air conditioning heating operation is started, the heating operation on the target apparatus may not be started.

For example, if 0<Absolute value of a deviation≤Second threshold, and End-point state of charge>Q 1 it indicates that cabin thermal comfort is close to user's thermal comfort preference, and the remaining state of charge of the battery is sufficient to meet the energy consumption requirement in the first driving process. In this case, the heating operation may be started and controlled based on the target air outlet temperature and/or the target air speed to perform heating. Because the air conditioning heating operation is started, the heating operation on the target apparatus may not be started.

In another possible implementation, to better meet user's thermal comfort preference, a specific temperature and/or air speed of the air conditioning heating operation in Table 5 or the heating level of the target apparatus in Table 5 may be adaptively adjusted based on user's setting habit (for example, based on information such as an operation record of a user on a cabin heating device). For example, adjustment may be performed based on a preset correspondence. A specific adjustment amount is not limited in embodiments of this application.

It may be understood that a thermal management operation control policy shown in Table 5 is merely an example, and does not constitute a limitation on embodiments of this application. In a specific implementation, the corresponding thermal management operation control policy may be set based on an actual application requirement. This is not limited in embodiments of this application.

In a possible implementation, the target thermal management operation may include both the battery heating operation and the cabin temperature adjustment operation. In this case, the energy consumption generated by the target thermal management operation includes energy consumption (referred to as thermal management energy consumption for short) required for the battery heating operation and the cabin temperature adjustment operation. The comprehensive energy consumption may be a sum of the target total energy consumption and the thermal management energy consumption. In this case, the control apparatus starts the battery heating operation and the cabin temperature adjustment operation based on the foregoing descriptions only when the remaining energy of the battery can meet the requirement of the comprehensive energy consumption. On the contrary, if the remaining energy of the battery cannot meet the requirement of the comprehensive energy consumption, the control apparatus may start the battery heating operation and the cabin temperature adjustment operation. Alternatively, the control apparatus may control, according to a preset thermal management operation control policy, whether to start the battery heating operation and the cabin temperature adjustment operation, or whether to start the battery heating operation and the cabin temperature adjustment operation in a degraded manner. For example, refer to the related descriptions in Table 5. Details are not described herein again.

In a possible implementation, after determining to start the battery heating operation, the air conditioning heating operation, or the heating operation on the target apparatus, the control apparatus may recommend these heating operations to the user through a human machine interaction interface, and may also recommend corresponding heating parameters to the user. For example, if the battery heating operation is recommended to the user, the target temperature to which the battery is heated may be recommended to the user. For example, if the air conditioning heating operation is recommended to the user, the target air outlet temperature and/or the target air speed corresponding to the air conditioning heating operation may be recommended to the user. For example, if the heating operation on the target apparatus is recommended to the user, the corresponding target heating level may be recommended to the user. For example, the human machine interaction interface may be, for example, the human machine interaction unit 140 shown in FIG. 1.

For example, after learning of the above recommended information through the human machine interaction unit 140, the user may feed back an acknowledgment instruction to the control apparatus through the human machine interaction unit 140. After receiving the acknowledgment instruction, the control apparatus sends a control instruction to a corresponding execution module (for example, the battery thermal management execution module 120 and/or the cabin thermal management execution module 130 shown in FIG. 1), to control the corresponding execution module to start the corresponding thermal management operation. For details, refer to the foregoing descriptions. Details are not described herein again.

In a possible implementation, the foregoing embodiments are mainly described by using heating in a low-temperature environment as an example. However, the implementation solutions of this application are not limited to being used in a low-temperature environment, and may be further applied to a refrigeration application scenario in a high-temperature environment. For specific implementation, refer to the foregoing implementation of heating control in the low-temperature environment. Details are not described herein again.

In conclusion, in embodiments of this application, after the vehicle is started, battery heating and/or cabin temperature adjustment are/is controlled based on driving situation information of a plurality of historical driving processes in a same-type driving scenario and a current battery status of the vehicle. This ensures an energy consumption requirement generated due to driving, heating by the user, and the like in the driving process of the vehicle. In addition, compared with a unified thermal management solution, this solution can provide required thermal management for different driving scenarios, adaptively meet thermal management requirements of the different driving scenarios, improve running efficiency of the vehicle in a low-temperature environment, and reduce unnecessary energy consumption waste.

In addition, in embodiments of this application, a coupling relationship between vehicle performance, user's thermal comfort requirement, and a thermal management function is comprehensively considered, to improve user experience and optimize overall vehicle performance. Further, a vehicle use scenario can be automatically identified and an optimal function enabling combination and function level specified value are actively recommended to the user. In addition, user's awareness on a vehicle thermal management function is enhanced, and a power usage frequency is increased.

The foregoing mainly describes the vehicle thermal management method provided in embodiments of this application. It may be understood that to implement the foregoing corresponding functions, the foregoing control apparatus includes a corresponding hardware structure and/or software module for performing the functions. In combination with example units and steps described in embodiments disclosed in this specification, this application can be implemented by hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In embodiments of this application, the control apparatus may be divided into functional modules based on the foregoing method examples. For example, functional modules may be obtained through division based on corresponding functions, or at least two functions may be integrated into one module. The integrated module may be implemented in a form of hardware, or may be implemented in a form of a software functional module. It should be noted that, in embodiments of this application, division into the modules is an example and is merely logical function division, and may be other division in an actual implementation.

When each functional module is obtained through division based on each corresponding function, embodiments of this application further provide a vehicle thermal management apparatus configured to implement any one of the foregoing methods. For example, a vehicle thermal management apparatus is provided, and includes a unit (or means) configured to implement the steps in any one of the foregoing methods.

For example, FIG. 4 is a diagram of a structure of a vehicle thermal management apparatus 400 according to an embodiment of this application. The vehicle thermal management apparatus 400 may be a control apparatus used to implement any embodiment of the foregoing vehicle thermal management method. The vehicle thermal management apparatus 400 may include an identification unit 401, an obtaining unit 402, and a controlling unit 403. The identification unit 401 is configured to identify, in response to a start operation on a vehicle in a first driving process, in a plurality of preset driving scenarios, a target driving scenario to which the first driving process belongs, where the first driving process includes a process from starting the vehicle to completing driving.

The obtaining unit 402 is configured to obtain target driving situation information, where the target driving situation information includes driving situation information of m historical driving processes that belong to the target driving scenario, and m is an integer greater than 1.

The controlling unit 403 is configured to control a target thermal management operation based on the target driving situation information and battery status information obtained after the vehicle is started, where the target thermal management operation includes a battery heating operation and/or a cabin temperature adjustment operation on the vehicle in the first driving process.

In a possible implementation, the target driving situation information includes m pieces of energy consumption information, an $i^{th}$ piece of energy consumption information belongs to energy consumption information of an $i^{th}$ historical driving process, and a value of i is an integer from 1 to m; and the controlling unit 403 is specifically configured to:

predict required target total energy consumption in the first driving process based on the m pieces of energy consumption information; and
control the target thermal management operation based on the target total energy consumption and the battery status information.

In a possible implementation, the target thermal management operation includes the battery heating operation; the target driving situation information further includes m battery output powers, and an $i^{th}$ battery output power belongs to a battery output power of the $i^{th}$ historical driving process; and
the controlling unit 403 is specifically configured to:
control the battery heating operation based on the target total energy consumption, a target battery output power, and the battery status information, where the target battery output power is a battery output power that is predicted based on the m battery output powers and that is required in the first driving process.

In a possible implementation, the battery status information includes a remaining state of charge and an allowed output power of the battery; and
the controlling unit 403 is specifically configured to:
start the battery heating operation when the allowed output power meets a requirement of the target battery output power, and the remaining state of charge meets a requirement of the target total energy consumption and an energy consumption requirement of the battery heating operation.

In a possible implementation, the battery heating operation indicates to heat the battery to a target temperature, and the target temperature is determined based on the target battery output power.

In a possible implementation, the remaining state of charge includes a state of charge increased after the battery heating operation is performed.

In a possible implementation, the target thermal management operation includes the cabin temperature adjustment operation; the target driving situation information further includes m pieces of thermal comfort preference information, and an $i^{th}$ piece of thermal comfort preference information is determined based on a cabin environment in the $i^{th}$ historical driving process; and
the controlling unit 403 is specifically configured to:
control the cabin temperature adjustment operation based on the target total energy consumption, target thermal comfort preference information, and the battery status information, where the target thermal comfort preference information is thermal comfort preference information that is predicted based on the m pieces of thermal comfort preference information and that is in the first driving process.

In a possible implementation, the battery status information includes the remaining state of charge of the battery; and the controlling unit 403 is specifically configured to:
control the cabin temperature adjustment operation based on the target thermal comfort preference information when the remaining state of charge meets the requirement of the target total energy consumption and a requirement of energy consumption required for the cabin temperature adjustment operation.

In a possible implementation, the cabin temperature adjustment operation includes an air conditioning heating operation; and the controlling unit 403 is specifically configured to:

search a first preset relationship table for a target air outlet temperature and/or a target air speed of an air conditioning based on the target thermal comfort preference information and a temperature of a cabin, where air outlet temperatures and/or air speeds, corresponding to a plurality of pieces of thermal comfort preference information and a plurality of cabin temperatures, of the air conditioning are recorded in the first preset relationship table; and start the air conditioning heating operation based on the target air outlet temperature and/or the target air speed.

In a possible implementation, the controlling unit 403 is specifically configured to:

recommend the target air outlet temperature and/or the target air speed to a user through a human machine interaction interface; and
start the air conditioning heating operation based on the target air outlet temperature and/or the target air speed in response to a confirmation operation of the user.

In a possible implementation, the cabin temperature adjustment operation includes a heating operation on a target apparatus, and the target apparatus includes at least one of a steering wheel, a seat, and a front windshield; and the controlling unit 403 is specifically configured to:

search a second preset relationship table for a target heating level of the target apparatus based on a deviation between the target thermal comfort preference information and current thermal comfort preference information, where heating levels, corresponding to a plurality of thermal comfort preference information deviation ranges, of the target apparatus are recorded in the second preset relationship table, and the current thermal comfort preference information is determined based on a cabin environment after the vehicle is started in the first driving process; and start the heating operation on the target apparatus based on the target heating level.

In a possible implementation, in response to the start operation on the vehicle in the first driving process, identifying, in the plurality of preset driving scenarios, the target driving scenario to which the first driving process belongs includes:

obtaining start information of the vehicle in the first driving process, where the start information includes start time and/or location information of the vehicle during the start; and
identifying, in the plurality of preset driving scenarios based on the start information, the target driving scenario to which the first driving process belongs.

For specific operations and beneficial effect of the units in the vehicle thermal management apparatus 400 shown in FIG. 4, refer to corresponding descriptions in any one of FIG. 2 and the possible embodiments of FIG. 2. Details are not described herein again.

For example, FIG. 5 is a diagram of a structure of a possible physical entity of a vehicle thermal management apparatus according to this application. The vehicle thermal management apparatus 500 shown in FIG. 5 may be a control apparatus used to implement any embodiment of the foregoing vehicle thermal management method. The vehicle thermal management apparatus 500 includes a processor 501, a memory 502, and a communication interface 503. The processor 501, the communication interface 503, and the memory 502 may be connected to each other or connected to each other through a bus 504.

For example, the memory 502 is configured to store a computer program and data of the vehicle thermal management apparatus 500. The memory 502 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like.

Software or program code required for all or a part of functions of the vehicle thermal management apparatus in the foregoing method embodiments may be stored in the memory 502.

In a possible implementation, if software or program code required for a part of the functions is stored in the memory 502, the processor 501, in addition to invoking the program code in the memory 502 to implement a part of the functions, may cooperate with another component (for example, the communication interface 503) to jointly complete another function (for example, a data receiving or sending function) described in the method embodiments.

There may be a plurality of communication interfaces 503 that are configured to support the vehicle thermal management apparatus 500 in performing communication, for example, receiving or sending data, a message, or the like.

For example, the processor 501 may be a processor, and is a circuit having a data processing capability. In an implementation, the processor may be a circuit having a capability of reading and running instructions, for example, a central processing unit (central processing unit, CPU), a microprocessor, a graphics processing unit (graphics processing unit, GPU) (may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by using an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU). Alternatively, the processor 501 may be a combination of at least two types of these processor forms, or the like.

The processor 501 may be configured to read the program stored in the memory 502, to perform the operations performed by the control apparatus in FIG. 2 and the possible embodiment of FIG. 2.

For specific operations and beneficial effect of the units in the vehicle thermal management apparatus 500 shown in FIG. 5, refer to corresponding descriptions in any one of FIG. 2 and the possible embodiments of FIG. 2. Details are not described herein again.

This application further provides a vehicle. The vehicle includes the vehicle thermal management apparatus according to FIG. 4 or FIG. 5.

This application further provides a chip. The chip includes a processor, a communication interface, and a memory. The communication interface is configured to receive and send data, the memory is configured to store a computer program or computer instructions, and the processor is configured to execute the computer program or computer instructions stored in the memory, so that the chip performs the method implemented by the control apparatus in any one of FIG. 2 and the possible implementations of FIG. 2.

An embodiment of this application further provides a computer-readable storage medium. The computer-readable storage medium stores a computer program or computer instructions, and the computer program or the computer instructions are executed by a processor to implement the method implemented by the control apparatus in any one of FIG. 2 and the possible implementations of FIG. 2.

An embodiment of this application further provides a computer program product. When the computer program product is read and executed by a computer, the method implemented by the control apparatus in any one of FIG. 2 and the possible implementations of FIG. 2 is performed.

Terms such as "first" and "second" in this application are used to distinguish between same or similar items with basically same roles and functions. It should be understood that there is no logical or timing dependency between "first", "second", and "$n^{th}$", and neither a quantity nor an execution sequence is limited. It should also be understood that although the following descriptions use terms such as "first" and "second" to describe various elements, these elements should not be limited by the terms. These terms are simply used to distinguish one element from another.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

It should be further understood that, when being used in the specification, a term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should further be understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

**Claims**

1. A vehicle thermal management method, wherein the method comprises:

   in response to a start operation on a vehicle in a first driving process, identifying, in a plurality of preset driving scenarios, a target driving scenario to which the first driving process belongs, wherein the first driving process comprises a process from starting the vehicle to completing driving;
   obtaining target driving situation information, wherein the target driving situation information comprises driving situation information of m historical driving processes that belong to the target driving scenario, and m is an integer greater than 1; and
   controlling a target thermal management operation based on the target driving situation information and battery status information obtained after the vehicle is started, wherein the target thermal management operation comprises a battery heating operation and/or a cabin temperature adjustment operation on the vehicle in the first driving process.

2. The method according to claim 1, wherein the target driving situation information comprises m pieces of energy consumption information, an $i^{th}$ piece of energy consumption information belongs to energy consumption information of an $i^{th}$ historical driving process, and a value of i is an integer from 1 to m; and controlling the target thermal management operation based on the target driving situation information and the battery status information obtained after the vehicle is started comprises:

   predicting required target total energy consumption in the first driving process based on the m pieces of energy consumption information; and
   controlling the target thermal management operation based on the target total energy consumption and the battery status information.

3. The method according to claim 2, wherein the target thermal management operation comprises the battery heating operation; the target driving situation information further comprises m battery output powers, and an $i^{th}$ battery output power belongs to a battery output power of the $i^{th}$ historical driving process; and controlling the target thermal management operation based on the target total energy consumption and the battery status information comprises:
   controlling the battery heating operation based on the target total energy consumption, a target battery output power, and the battery status information, wherein the target battery output power is a battery output power that is predicted based on the m battery output powers and that is required in the first driving process.

4. The method according to claim 3, wherein the battery status information comprises a remaining state of charge and an allowed output power of the battery; and
   controlling the battery heating operation based on the target total energy consumption, the target battery output power, and the battery status information comprises:
   starting the battery heating operation when the allowed output power meets a requirement of the target battery output power, and the remaining state of charge meets a requirement of the target total energy consumption and an energy consumption requirement of the battery heating operation.

5. The method according to claim 4, wherein the battery heating operation indicates to heat the battery to a target temperature, and the target temperature is determined based on the target battery output power.

6. The method according to claim 4 or 5, wherein the remaining state of charge comprises a state of charge increased after the battery heating operation is performed.

7. The method according to any one of claims 2 to 6, wherein the target thermal management operation comprises the cabin temperature adjustment operation; the target driving situation information further comprises m pieces of thermal comfort preference information, and an $i^{th}$ piece of thermal comfort preference information is determined based on a cabin environment in the $i^{th}$ historical driving process; and

controlling the target thermal management operation based on the target total energy consumption and the battery status information comprises:

controlling the cabin temperature adjustment operation based on the target total energy consumption, target thermal comfort preference information, and the battery status information, wherein the target thermal comfort preference information is thermal comfort preference information that is predicted based on the m pieces of thermal comfort preference information and that is in the first driving process.

8. The method according to claim 7, wherein the battery status information comprises the remaining state of charge of the battery; and controlling the cabin temperature adjustment operation based on the target total energy consumption, the target thermal comfort preference information, and the battery status information comprises:

controlling the cabin temperature adjustment operation based on the target thermal comfort preference information when the remaining state of charge meets the requirement of the target total energy consumption and a requirement of energy consumption required for the cabin temperature adjustment operation.

9. The method according to claim 8, wherein the cabin temperature adjustment operation comprises an air conditioning heating operation; and controlling the cabin temperature adjustment operation based on the target thermal comfort preference information comprises:

searching a first preset relationship table for a target air outlet temperature and/or a target air speed of an air conditioning based on the target thermal comfort preference information and a temperature of a cabin, wherein air outlet temperatures and/or air speeds, corresponding to a plurality of pieces of thermal comfort preference information and a plurality of cabin temperatures, of the air conditioning are recorded in the first preset relationship table; and

starting the air conditioning heating operation based on the target air outlet temperature and/or the target air speed.

10. The method according to claim 9, wherein starting the air conditioning heating operation based on the target air outlet temperature and/or the target air speed comprises:

recommending the target air outlet temperature and/or the target air speed to a user through a human machine interaction interface; and

starting the air conditioning heating operation based on the target air outlet temperature and/or the target air speed in response to a confirmation operation of the user.

11. The method according to any one of claims 8 to 10, wherein the cabin temperature adjustment operation comprises a heating operation on a target apparatus, and the target apparatus comprises at least one of a steering wheel, a seat, and a front windshield; and

controlling the cabin temperature adjustment operation based on the target thermal comfort preference information comprises:

searching a second preset relationship table for a target heating level of the target apparatus based on a deviation between the target thermal comfort preference information and current thermal comfort preference information, wherein heating levels, corresponding to a plurality of thermal comfort preference information deviation ranges, of the target apparatus are recorded in the second preset relationship table, and the current thermal comfort preference information is determined based on a cabin environment after the vehicle is started in the first driving process; and

starting the heating operation on the target apparatus based on the target heating level.

12. The method according to any one of claims 1 to 11, wherein in response to the start operation on the vehicle in the first driving process, identifying, in the plurality of preset driving scenarios, the target driving scenario to which the first driving process belongs comprises:

obtaining start information of the vehicle in the first driving process, wherein the start information comprises start time and/or location information of the vehicle during the start; and

identifying, in the plurality of preset driving scenarios based on the start information, the target driving scenario to which the first driving process belongs.

13. A vehicle thermal management apparatus, wherein the apparatus comprises:

an identification unit, configured to identify, in response to a start operation on a vehicle in a first driving process, in a plurality of preset driving scenarios, a target driving scenario to which the first driving process belongs, wherein the first driving process comprises a process from starting the vehicle to completing driving;
an obtaining unit, configured to obtain target driving situation information, wherein the target driving situation information comprises driving situation information of m historical driving processes that belong to the target driving scenario, and m is an integer greater than 1; and
a controlling unit, configured to control a target thermal management operation based on the target driving situation information and battery status information obtained after the vehicle is started, wherein the target thermal management operation comprises a battery heating operation and/or a cabin temperature adjustment operation on the vehicle in the first driving process.

14. The apparatus according to claim 13, wherein the target driving situation information comprises m pieces of energy consumption information, an $i^{th}$ piece of energy consumption information belongs to energy consumption information of an $i^{th}$ historical driving process, and a value of i is an integer from 1 to m; and the controlling unit is specifically configured to:

predict required target total energy consumption in the first driving process based on the m pieces of energy consumption information; and
control the target thermal management operation based on the target total energy consumption and the battery status information.

15. The apparatus according to claim 14, wherein the target thermal management operation comprises the battery heating operation; the target driving situation information further comprises m battery output powers, and an $i^{th}$ battery output power belongs to a battery output power of the $i^{th}$ historical driving process; and
the controlling unit is specifically configured to:
control the battery heating operation based on the target total energy consumption, a target battery output power, and the battery status information, wherein the target battery output power is a battery output power that is predicted based on the m battery output powers and that is required in the first driving process.

16. The apparatus according to claim 15, wherein the battery status information comprises a remaining state of charge and an allowed output power of the battery; and
the controlling unit is specifically configured to:
start the battery heating operation when the allowed output power meets a requirement of the target battery output power, and the remaining state of charge meets a requirement of the target total energy consumption and an energy consumption requirement of the battery heating operation.

17. The apparatus according to claim 16, wherein the battery heating operation indicates to heat the battery to a target temperature, and the target temperature is determined based on the target battery output power.

18. The apparatus according to claim 16 or 17, wherein the remaining state of charge comprises a state of charge increased after the battery heating operation is performed.

19. The apparatus according to any one of claims 14 to 18, wherein the target thermal management operation comprises the cabin temperature adjustment operation; the target driving situation information further comprises m pieces of thermal comfort preference information, and an $i^{th}$ piece of thermal comfort preference information is determined based on a cabin environment in the $i^{th}$ historical driving process; and
the controlling unit is specifically configured to:
control the cabin temperature adjustment operation based on the target total energy consumption, target thermal comfort preference information, and the battery status information, wherein the target thermal comfort preference information is thermal comfort preference information that is predicted based on the m pieces of thermal comfort preference information and that is in the first driving process.

20. The apparatus according to claim 19, wherein the battery status information comprises the remaining state of charge of the battery; and the controlling unit is specifically configured to:
control the cabin temperature adjustment operation based on the target thermal comfort preference information when the remaining state of charge meets the requirement of the target total energy consumption and a requirement of energy consumption required for the cabin temperature adjustment operation.

21. The apparatus according to claim 20, wherein the cabin temperature adjustment operation comprises an air conditioning heating operation; and the controlling unit is specifically configured to:

   search a first preset relationship table for a target air outlet temperature and/or a target air speed of an air conditioning based on the target thermal comfort preference information and a temperature of a cabin, wherein air outlet temperatures and/or air speeds, corresponding to a plurality of pieces of thermal comfort preference information and a plurality of cabin temperatures, of the air conditioning are recorded in the first preset relationship table; and
   start the air conditioning heating operation based on the target air outlet temperature and/or the target air speed.

22. The apparatus according to claim 21, wherein the controlling unit is specifically configured to:

   recommend the target air outlet temperature and/or the target air speed to a user through a human machine interaction interface; and
   start the air conditioning heating operation based on the target air outlet temperature and/or the target air speed in response to a confirmation operation of the user.

23. The apparatus according to any one of claims 20 to 22, wherein the cabin temperature adjustment operation comprises a heating operation on a target apparatus, and the target apparatus comprises at least one of a steering wheel, a seat, and a front windshield; and
   the controlling unit is specifically configured to:

   search a second preset relationship table for a target heating level of the target apparatus based on a deviation between the target thermal comfort preference information and current thermal comfort preference information, wherein heating levels, corresponding to a plurality of thermal comfort preference information deviation ranges, of the target apparatus are recorded in the second preset relationship table, and the current thermal comfort preference information is determined based on a cabin environment after the vehicle is started in the first driving process; and
   start the heating operation on the target apparatus based on the target heating level.

24. The apparatus according to any one of claims 13 to 23, wherein in response to the start operation on the vehicle in the first driving process, identifying, in the plurality of preset driving scenarios, the target driving scenario to which the first driving process belongs comprises:

   obtaining start information of the vehicle in the first driving process, wherein the start information comprises start time and/or location information of the vehicle during the start; and
   identifying, in the plurality of preset driving scenarios based on the start information, the target driving scenario to which the first driving process belongs.

25. A vehicle thermal management apparatus, wherein the vehicle thermal management apparatus comprises a processor, a communication interface, and a memory, the communication interface is configured to receive and send data, the memory is configured to store a computer program or computer instructions, and the processor is configured to execute the computer program or the computer instructions stored in the memory, so that the vehicle thermal management apparatus performs the method according to any one of claims 1 to 12.

26. A vehicle, comprising the vehicle thermal management apparatus according to claim 25.

27. A chip, wherein the chip comprises a processor, a communication interface, and a memory, the communication interface is configured to receive and send data, the memory is configured to store a computer program or computer instructions, and the processor is configured to execute the computer program or the computer instructions stored in the memory, so that the chip performs the method according to any one of claims 1 to 12.

28. A computer-readable storage medium, wherein the computer-readable storage medium stores a computer program or computer instructions, and the computer program or computer instructions are executed by a processor to implement the method according to any one of claims 1 to 12.

**29.** A computer program product, wherein when the computer program product is executed by a processor, the method according to any one of claims 1 to 12 is implemented.

Thermal management system 100

FIG. 1

S201: In response to a start operation on a vehicle in a first driving process, a control apparatus identifies, in a plurality of preset driving scenarios, a target driving scenario to which the first driving process belongs, where the first driving process includes a process from starting the vehicle to completing driving

S202: The control apparatus obtains target driving situation information, where the target driving situation information includes driving situation information of m historical driving processes that belong to the target driving scenario, and m is an integer greater than 1

S203: The control apparatus controls a target thermal management operation based on the target driving situation information and battery status information after the vehicle is started, where the target thermal management operation includes a battery heating operation on the vehicle and/or a cabin temperature adjustment operation on the vehicle in the first driving process

FIG. 2

```
                    ┌─────────────┐
                    │    Start    │
                    └──────┬──────┘
                           │
                           ▼
          ╱◇╲
     Is an environment
  temperature less than a preset ──────────────────┐
   temperature threshold?                          No
          ╲◇╱                                      │
           │                                       │
          Yes                                      │
           ▼                                       │
  ┌────────────────────────────────┐              │
  │ Obtain remaining energy and an  │              │
  │   allowed output power of a     │              │
  │ battery, and obtain predicted   │              │
  │ comprehensive energy consumption│              │
  │  and a target battery output    │              │
  │           power                 │              │
  └────────────────┬───────────────┘              │
                   │                               │
                   ▼                               ▼
          ╱◇╲                          ┌──────────────┐
     Is the allowed                    │  Do not start│
  output power less than the target    │   a battery  │
  output power, and the remaining ──No─▶│    heating   │
   energy greater than the             │   operation  │
  comprehensive energy consumption?    └──────┬───────┘
          ╲◇╱                                 │
           │                                  │
          Yes                                 │
           ▼                                  ▼
  ┌────────────────────────────┐      ┌────────────┐
  │ Start a battery heating    │─────▶│    Start    │
  │       operation            │      └────────────┘
  └────────────────────────────┘
```

FIG. 3

Vehicle thermal management apparatus 400

Identification unit — 401

Obtaining unit — 402

Controlling unit — 403

FIG. 4

Vehicle thermal management apparatus 500

501

Processor

503

Communication interface

504

502

Memory

FIG. 5

## INTERNATIONAL SEARCH REPORT

| International application No. |
|---|
| **PCT/CN2024/113275** |

### A. CLASSIFICATION OF SUBJECT MATTER

B60L58/27(2019.01)i; B60H1/00(2006.01)i

According to International Patent Classification (IPC) or to both national classification and IPC

### B. FIELDS SEARCHED

Minimum documentation searched (classification system followed by classification symbols)

IPC:B60L,B60H

Documentation searched other than minimum documentation to the extent that such documents are included in the fields searched

Electronic data base consulted during the international search (name of data base and, where practicable, search terms used)

CNTXT; ENTXTC; ENTXT; VEN; CNKI: 华为, 车, 启动, 场景, 行程, 历史, 热管理, 电池, 舱, 室, 剩余电量, 能耗, 功率, 加热, 温度, 调节, 个性, 偏好, electric, vehicle, thermal, management, driving, process, starting, battery, quantity, heating, temperature

### C. DOCUMENTS CONSIDERED TO BE RELEVANT

| Category* | Citation of document, with indication, where appropriate, of the relevant passages | Relevant to claim No. |
|---|---|---|
| Y | CN 116533730 A (SHANGHAI JIDU AUTOMOBILE CO., LTD.) 04 August 2023 (2023-08-04)<br>    description, paragraphs 27-230, and figures 1-4 | 1-29 |
| Y | CN 110065455 A (SHENZHEN MAPGOO TECHNOLOGY CO., LTD.) 30 July 2019 (2019-07-30)<br>    description, paragraphs 41-112, and figures 1-5 | 1-29 |
| Y | WO 2012091377 A2 (KOREA ADVANCED INSTITUTE OF SCIENCE AND TECHNOLOGY et al.) 05 July 2012 (2012-07-05)<br>    description, paragraphs 30-87, and figures 1-2 | 7-11, 19-23 |
| Y | CN 111619309 A (CHINA FAW CO., LTD.) 04 September 2020 (2020-09-04)<br>    description, paragraphs 19-98, and figures 1-6 | 7-11, 9-23 |
| A | CN 115648893 A (GREAT WALL MOTOR COMPANY LIMITED) 31 January 2023 (2023-01-31)<br>    entire document | 1-29 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 November 2024** | **12 November 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/113275**

### C. DOCUMENTS CONSIDERED TO BE RELEVANT

| Category* | Citation of document, with indication, where appropriate, of the relevant passages | Relevant to claim No. |
|---|---|---|
| A | CN 116476762 A (UNITED AUTOMOTIVE ELECTRONIC SYSTEMS CO., LTD.) 25 July 2023 (2023-07-25) entire document | 1-29 |
| A | CN 116674349 A (JIANGXI ISUZU MOTORS CO., LTD.) 01 September 2023 (2023-09-01) entire document | 1-29 |
| A | CN 116729203 A (SAIC VOLKSWAGEN AUTOMOTIVE CO., LTD.) 12 September 2023 (2023-09-12) entire document | 1-29 |

Form PCT/ISA/210 (second sheet) (July 2022)

## INTERNATIONAL SEARCH REPORT
### Information on patent family members

| International application No. |
| --- |
| **PCT/CN2024/113275** |

| Patent document cited in search report | | | Publication date (day/month/year) | Patent family member(s) | | | Publication date (day/month/year) |
| --- | --- | --- | --- | --- | --- | --- | --- |
| CN | 116533730 | A | 04 August 2023 | None | | | |
| CN | 110065455 | A | 30 July 2019 | None | | | |
| WO | 2012091377 | A2 | 05 July 2012 | KR | 20120073843 | A | 05 July 2012 |
| | | | | KR | 101317686 | B1 | 15 October 2013 |
| | | | | WO | 2012091377 | A3 | 27 September 2012 |
| CN | 111619309 | A | 04 September 2020 | WO | 2021244536 | A1 | 09 December 2021 |
| CN | 115648893 | A | 31 January 2023 | None | | | |
| CN | 116476762 | A | 25 July 2023 | None | | | |
| CN | 116674349 | A | 01 September 2023 | None | | | |
| CN | 116729203 | A | 12 September 2023 | None | | | |

Form PCT/ISA/210 (patent family annex) (July 2022)

## REFERENCES CITED IN THE DESCRIPTION

**Patent documents cited in the description**

- CN 202311210846